# EUROPEAN PATENT SPECIFICATION

(11) **EP 1 572 716 B1**
(45) Date of publication and mention of the grant of the patent: **27.09.2006**
(21) Application number: 02703207.7
(22) Date of filing: 23.01.2002
(51) Int. Cl.: C07K 1/00, C09K 19/20, C07C 69/76

(54) **METHODS FOR SYNTHESIS OF LIQUID CRYSTALS**
VERFAHREN ZUR SYNTHESE VON FLÜSSIGKRISTALLEN
PROCEDES DE SYNTHESE DE CRISTAUX LIQUIDES

(30) Priority: 23.01.2001 US 263388 P
(43) Date of publication of application: 14.09.2005
(73) Proprietor: SOUTHWEST RESEARCH INSTITUTE, San Antonio, TX 78238-5166 (US)
(72) Inventor: WELLINGHOFF, Stephen, T., San Antonio, TX 78250 (US); HANSON, Douglas, P., San Antonio, TX 78251 (US)
(74) Representative: Lockey, Robert Alexander
(86) International application number: PCT/US2002/001911
(87) International publication number: WO 2002/066493

(56) References cited:
- WO-A-98/13008
- US-A- 5 073 294
- US-A- 5 202 053
- US-A- 5 654 471
- US-A- 5 833 880
- US-A- 5 989 461
- US-A- 6 090 308

## Description

### Field of the Invention

The application relates to new, less costly methods for making novel platform molecules and polymerizable mesogens.

### Background of the Invention

Photocurable resins which are transparent or translucent, radioopaque, have good workability, and have good mechanical strength and stability are useful in medical, dental, adhesive, and stereolithographic applications.

Low polymerization shrinkage is an important property for such resins. In dental applications, the phrase "zero polymerization shrinkage" typically means that the stresses accumulated during curing do not debond the dentin-restorative interface or fracture the tooth or restorative, which can result in marginal leakage and microbial attack of the tooth. Low polymerization shrinkage also is important to achieve accurate reproduction of photolithographic imprints and in producing optical elements.

Another advantageous property for such resins is maintenance of a liquid crystalline state during processing. For comfort in dental applications, the resin should be curable at "room temperature," defined herein as typical ambient temperatures up to body temperature. Preferred curing temperatures are from about 20 °C to about 37 °C. Mesogens which have been found to polymerize in a relatively stable manner at such temperatures are bis 1,4 [4'-(6'-methacryloxyhexyloxy) benzoyloxy] t-butylphenylene mesogens and their structural derivatives. These mesogens have the following general structure: 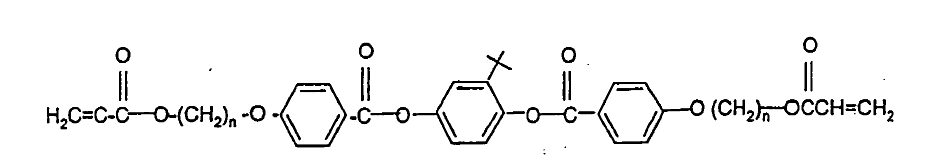 US 5,833,880 A discloses such mesogens as well as methods for making them.

Unfortunately known synthetic methods for producing these mesogens are costly and have relatively low yields. As a result, the mesogens have enjoyed limited commercial use. Less costly synthetic methods are needed to produce the mesogens.

According to this invention there is provided a method for making platform molecules comprising reacting 4-alkoxy benzoyl chloride with a hydroquinone comprising a desired substituent (R²) under first conditions effective to produce bis 1,4 [4-alkoxybenzoyloxy]-R²-phenylene (alkyl ether) comprising bis terminal alkoxy groups wherein, when both bis terminal alkoxy groups are converted to polymerizable groups, R² provides sufficient steric hindrance to achieve a nematic state at room temperature while suppressing crystallinity at room temperature.

Preferably said alkyl ether is subjected to second conditions effective to cleave said bis terminal alkoxy groups, thereby producing a solution comprising diphenolic platform molecules comprising bis terminal hydroxyl groups.

Conveniently said 4-alkoxy benzoyl chloride is 4-methoxy benzoyl chloride.

Advantageously said first conditions comprise a solution comprising a hydrogen chloride scavenging agent effective to produce said alkyl ether.

In one embodiment said hydrogen chloride scavenging agent is selected from the group consisting of aromatic and aliphatic amines.

In an alternative embodiment said hydrogen chloride scavenging agent comprises pyridine.

Conveniently said solution further comprises a trialkylamine having from about 2 to about 4 carbon atoms.

Advantageously said solution further comprises triethyl amine.

Preferably R² is selected from the group consisting of methyl groups and t-butyl groups.

Advantageously when said alkyl ether is to be incorporated into a monomer, R² is selected from the group consisting of t-butyl groups, isopropyl groups, secondary butyl groups, methyl groups, and phenyl groups; and, when said alkyl ether is to be incorporated into a dimer, R² is selected from the group consisting of bulky organic groups and groups having a bulk less than methyl groups.

In one embodiment said second conditions comprise exposing said bis terminal alkoxy groups to a mixture comprising a quantity of said alkyl ether and an amount of a nucleophile at a temperature and for a time, said quantity, said amount, said temperature and said time being effective to produce complexes comprising said diphenolic platform molecules comprising intact aromatic ester bonds and to cause said complexes to precipitate out of said solution substantially as they are formed.

Alternatively said second conditions comprise exposing said bis terminal alkoxy groups to a mixture comprising a quantity of said alkyl ether and an amount of an aliphatic thiol effective to dissolve a concentration of aluminum chloride in a chlorinated solvent, said exposing taking place at a temperature and for a time effective to produce complexes comprising said diphenolic platform molecules comprising intact aromatic ester bonds and to cause said complexes to precipitate out of said solution substantially as they are formed.

Preferably said bis-terminal alkoxy groups have from about 1 to about 8 carbon atoms, preferably from 1 to about 4 carbon atoms.

Conveniently said bis-terminal alkoxy groups are methyl ether groups.

Advantageously said aliphatic thiol comprises an alkyl group having from about 1 to about 11 carbon atoms.

Preferably said aliphatic thiol is ethane thiol.

Conveniently said quantity of alkyl ether and said amount of aliphatic thiol is effective to produce at least one mole of thiol per mole of alkyl ether.

Advantageously said quantity of alkyl ether and said amount of aliphatic thiol is effective to produce at least two moles of thiol per mole of alkyl ether.

Conveniently said concentration of aluminum chloride produces a ratio of said aluminum chloride to said alkyl ether of 4:1 or more.

Preferably said second conditions further comprise an amount of chlorinated solvent effective to maintain said precipitate in slurry form.

Advantageously said amount of chlorinated solvent comprises at least one mole of thiol per mole of alkyl ether.

The method may further comprise quenching said precipitate.

Preferably said precipitate with a quenching agent selected from the group consisting of water, alcohol, and combinations thereof, under quenching conditions effective to decompose said complexes.

Advantageously said amount of chlorinated solvent comprises a molar excess of from about 3 to about 7 relative to said ethane thiol.

In one embodiment said amount of chlorinated solvent comprises a molar excess of 5 or more relative to said ethane thiol.

Conveniently said chlorinated solvent is methylene chloride.

Advantageously said temperature comprises an initial temperature of about 0°C.

Most conveniently said temperature is maintained at about 25° C or less.

Advantageously the method further comprises exposing said diphenolic platform molecules comprising bis terminal hydroxyl groups to said first conditions, producing elongated diphenolic platform molecules comprising at least one terminal alkoxy group.

The method may also further comprise subjecting said elongated diphenolic platform molecules to said second conditions, said second conditions being effective to cleave said at least one terminal alkoxy group on said elongated diphenolic platform molecules to produce terminally hydroxylated elongated diphenolic platform molecules comprising at least one terminal hydroxyl group.

The method may further comprises subjecting molecules selected from the group consisting of said diphenolic platform molecules comprising bis terminal hydroxyl groups and said hydroxylated elongated diphenolic platform molecules to conditions effective to react at least one terminal hydroxyl group with a polymerizable group.

Preferably said polymerizable group comprises a polymerizable unsaturated carbon-carbon bond.

Conveniently the method further comprises reacting a first terminal hydroxyl group of a first diphenolic platform molecule with a first end of a bridging agent selected from the group consisting of an α:ω-carboxylic acid and an oligodialkylsiloxane comprising an alkyl group having from about 4 to about 12 carbon atoms; and reacting a first terminal hydroxyl group of a second diphenolic platform molecule with a second, opposed end of said bridging agent.

The mesogens may be produced which has the following general structure. 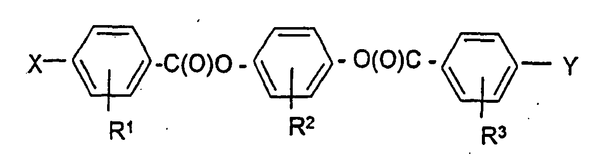
- Wherein X and Y: are selected from the group consisting of terminal funtionalities and polymerizable groups. In platform molecules, X and Y are terminal functionalities. In polymerizable mesogens, X and Y are polymerizable groups. Terminal functionalities and polymerizable groups are further defined below; and,
- R²: is a desired substituent, preferably a "bulky organic group," defined herein as an organic group having a bulk greater than R₁ and R₃, whereby, when both X and Y are polymerizable groups, said bulk is adapted to provide sufficient steric hindrance to achieve a nematic state at room temperature while suppressing crystallinity at room temperature. The result is effective rheology and workability at room temperature. Suitable R² groups generate asymmetry in the packing of the molecules, and include, but are not necessarily limited to alkyl groups having from about 1 to 6 carbon atoms and aryl groups. Preferred R² groups include, but are not necessarily limited to alkyl groups having from about 1 to about 4 carbon atoms and phenyl groups. More preferred R² groups are methyl groups, t-butyl groups, isopropyl groups, secondary butyl groups, and phenyl groups. Most preferred R² groups are methyl groups and t-butyl groups; and
- R¹ and R³: are selected from groups less bulky than R², preferably selected from the group consisting of hydrogen atoms and methyl groups, depending upon the relative bulk of R^{1,} R^{3,} and R².

As used herein, the phrase "terminal functionalities" refers to X and Y where the referenced molecules are platform molecules. "Terminal functionalities" are defined as protective groups and precursors to polymerizable groups, which generally comprise functionalities that readily react with "polymerizable groups" to form reactive ends. Suitable terminal functionalities independently are selected from the group consisting of hydroxyl groups, amino groups, sulfhydryl groups, halogen atoms, and "spacer groups", defined herein as selected from the group consisting of H-(CH₂)ₙ-O- groups, Cl(CH₂)ₙ-O- groups, Br(CH₂)ₙ-O- groups, I(CH₂)ₙ-O-, wherein n is from about 2 to about 12, preferably from about 2 to about 9, more preferably from about 2 to about 6, and most preferably 6, and the CH₂ groups independently can be substituted by oxygen, sulfur, or an ester group; provided that at least 2 carbon atoms separate said oxygen or said ester group. Most preferred terminal functionalities are hydroxyl groups.

Where the mesogen is a polymerizable mesogen, X and/or Y are "polymerizable groups," defined as groups that may be polymerized by nucleophilic addition, free radical polymerization, or a combination thereof. Preferred polymerizable groups are polymerizable by Michael addition. Michael addition requires the addition of a nucleophile and an electron deficient alkene. Groups suitable for polymerization by Michael addition include but are not necessarily limited to the examples found in A. Michael, *J. Prakt. Chem. [2]* **35,** 349 (1887); R. Connor and W. R. McClelland, *J Org. Chem.,* **3,** 570 (1938); and C. R. Hauser, M. T. Tetenbaum, *J Org. Chem., **23,*** 1146 (1959).

Examples of suitable polymerizable groups include, but are not necessarily limited to substituted and unsubstituted alkenyl ester groups comprising a polymerizable unsaturated carbon-carbon bond, wherein said alkenyl group has from about 2 to about 12 carbon atoms, preferably from about 2 to about 9 carbon atoms, more preferably from about 2 to about 6 carbon atoms. In one embodiment, said substituted alkenyl ester groups comprise at least one halogen atom selected from the group consisting of chorine atoms, bromine atoms, and iodine atoms. Preferred alkenyl esters are acryloyloxy groups, methacryloyloxy groups, acryloyloxy alkoxy groups and methacryloyloxy alkoxy groups. More preferred polymerizable groups include, but are not necessarily limited to cinnamoyloxy groups, acryloyloxy groups, methacryloyloxy groups comprising an alkyl moiety having from about 2 to about 12 carbon atoms, thiolalkyloxy groups comprising an alkyl moiety having from about 2 to about 12 carbon atoms, preferably from about 2 to about 9, more preferably from about 2 to about 6, and most preferably 6 carbon atoms. Because assymetry suppresses crystallinity while maintaining a nematic state, it is preferred for X and Y to be different groups.

Most preferred polymerizable mesogens are bis 1,4 [4'-(6'-(R,R⁴)-oxy-A-oxy)benzoyloxy] R²-phenylene mesogens. These mesogens have the following general structure: 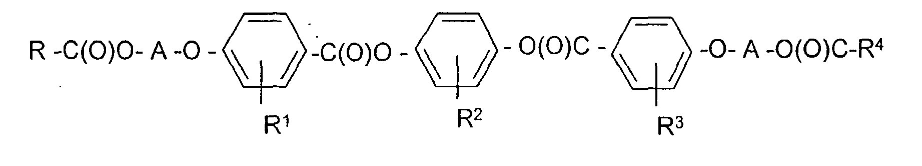 This structure is similar to the structure of the platform molecules except that X and Y are replaced by polymerizable groups wherein:
- A: is selected from the group consisting of alkyl groups and methyl-substituted alkyl groups having from about 2 to about 12 carbon atoms, preferably having from about 2 to about 9 carbon atoms, more preferably having from about 2 to about 6 carbon atoms, and most preferably having about 6 carbon atoms; and
- R and R⁴: are polymerizable groups, including but not necessarily limited to nucleophiles and groups comprising at least one electron deficient alkene. Suitable nucleophiles include, but are not necessarily limited to ester groups, organic acid groups, amine groups, hydroxyl groups, and sulfhydryl groups. More preferred polymerizable groups comprise electron deficient alkenes. Suitable electron deficient alkenes independently are selected from the group consisting of substituted and unsubstituted alkenyl ester groups comprising a polymerizable unsaturated carbon-carbon bond, wherein said alkenyl group has from about 2 to about 12 carbon atoms, preferably about 6 carbon atoms. In one embodiment, said substituted alkenyl ester groups comprise a halogen atom selected from the group consisting of chlorine atoms, bromine atoms, and iodine atoms. Preferred alkenyl esters are acryloyl groups and methacryloyl groups. Again, because assymetry suppresses crystallinity while maintaining a nematic state, it is preferred for X and Y to be different groups. One end of a polymerizable mesogen also may comprise a bridging agent, in which case R² may also be hydrogen or group less bulky than a methyl group, due to the inherent assymmetry of the dimer molecule. Dimers are discussed more fully below.

In a preferred embodiment, R² is either a t-butyl group or a methyl group, A is a hexyl group, and one of R and R⁴ is selected from the group consisting of an acryloyl group and a methacryloyl group.

In a preferred embodiment, a proportion of X and/or Y (or R and/or R⁴) comprises a crystallization retardant. A "crystallization retardant" is defined as a substituent that retards crystallization of the monomers without suppressing the T_{n>isotropic} (the nematic to isotropic transition temperature). The proportion of X and/or Y (or R and/or R⁴) that comprises a crystallization retardant preferably is sufficient to suppress crystallinity of the mesogenic material, particularly at room temperature for dental applications, and to maintain flowability of the mesogenic material under the particular processing conditions. Suitable crystallization retardants include, but are not necessarily limited to halogen atoms. Exemplary halogen atoms are chlorine, bromine, and iodine, preferably chlorine. Typically, the proportion of the crystallization retardant required is about 3-50 mole%, more preferably 10-15 mole%, and most preferably about 14 mole% or less.

- Depending on the sample preparation, the volumetric photopolymerization shrinkage of these materials at room temperature varies from about 0.9 to about 1.7%, which is a factor of 6-4X improvement over commercially available blends containing 2,2-bis[p-(2'-hydroxy-3'-methacryloxypropoxy)phenylene] propane ("bis-GMA"). Preferably, the volumetric polymerization shrinkage is about 3 vol.% change or less, more preferably about 2 vol. % change or less.

Mesomers of higher temperature nematic stability are "mesogenic dimers," formed by reacting X and Y with opposite ends of a bridging agent. Examples of suitable bridging agents include, but are not necessarily limited to dicarboxylic acids (preferably α,ω-carboxylic acids) having from about 4 to about 12 carbon atoms, preferably from about 6 to about 10 carbon atoms, and oligodialkylsiloxanes preferably comprising alkyl groups having from about 1 to about 3 carbon atoms, most preferably methyl groups.

### New Synthetic Pathways to Make the Mesogens

In the past, polymerizable mesogens having the foregoing structure were synthesized by a multistep process ("Scheme 1"), as shown below:

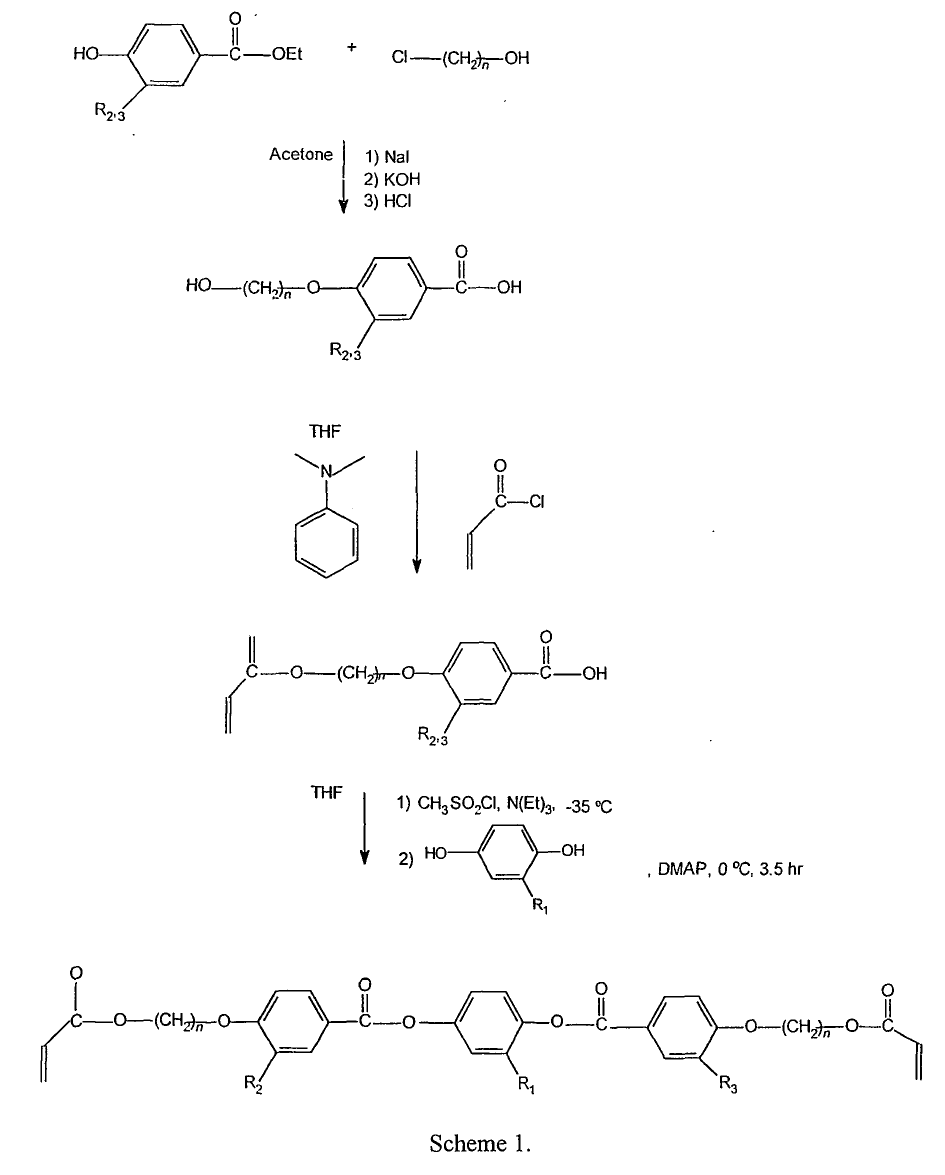

In Scheme 1, molecular ends containing the outer aromatic groups and the alkyl groups were produced first and then coupled to the central aromatic group by diaryl ester bonds. Specifically, the alkali phenoxide salt of p-hydroxybenzoic acid-ethyl -ester nucleophile attacked the 6-hydroxy 1-chloro hexane with the aid of iodide catalyst to produce the 6-hydroxyhexyloxybenzoic acid (after hydrolysis of the ethyl ester) by a procedure that yielded at best 70% product. Although rather straightforward, the commercial potential of this synthesis has been limited by the use of the 6-hydroxy 1-chlorohexane. The reaction is run in acetone over several days and requires significant workup. The reaction also produces only about a 40% overall yield, at best, and requires column separation to separate monosubstituted from disubstituted material

The present application provides new synthetic pathways that use relatively low cost materials to synthesize a central aromatic component comprising end groups that are easily reacted with the desired polymerizable groups. The methods are qualitative, produce high yields, the products are easily purified (preferably by crystallization), and many of the products are more stable than bisalkenes, which must be stabilized against polymerization.

### Brief Summary of the Processes

According to the present application, functionalities on a phenylene ring at para-positions (preferably hydroxyl groups) form ester linkages with one of two functionalities in para-positions on two other phenylene rings. The result is three-ring platform molecules having terminal functionalities. One or both of the terminal functionalities may be coupled with polymerizable groups, preferably a nuceleophile and/or an electron deficient alkene-containing group, to produce polymerizable mesogens.

### -Preparation of Molecular Ends and Coupling to Central Aromatic Group

In a first embodiment (Scheme 2), the molecular ends of the mesogen (outer aromatic and alkyl groups) are prepared and coupled to the central aromatic group by diaryl ester bonds. This synthetic pathway is illustrated and described in detail below: 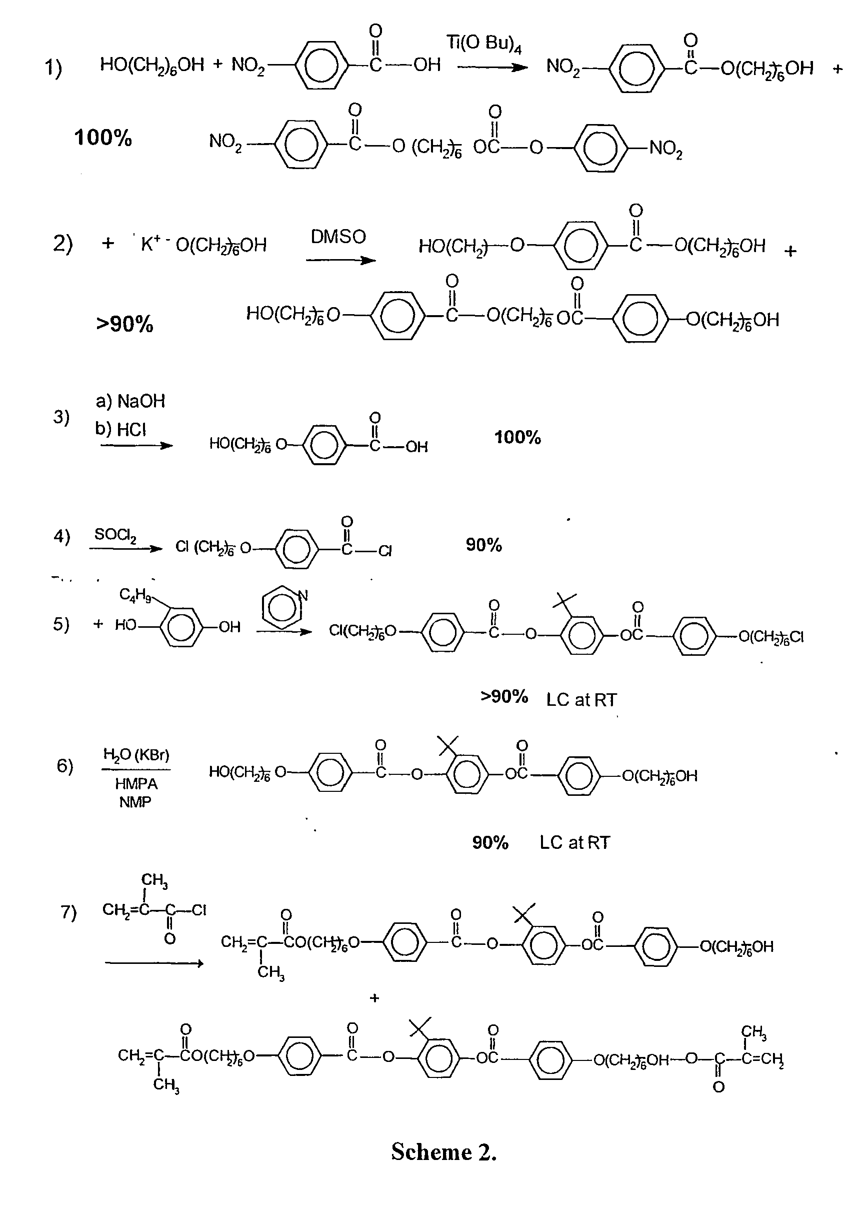 Exemplary "platform molecules" are illustrated in (6), above.

To summarize Scheme 2, bis 1,4 [4"-(6'-chloroalkyloxy) benzoyloxy] R²⁻ phenylene, preferably bis 1,4 [4"-(6'-chlorohexyloxy) benzoyloxy] t-butylphenylene, is converted to the analogous bis ω-hydroxy or ω-hydroxy chloro compound. The hydroxy- compound (the platform molecule) may be terminated with one or more polymerizable groups. Preferred polymerizable groups are nucleophilic and electron deficient groups, most preferably independently selected from the group consisting of acryloyl groups, methacryloyl groups, and cinnamoyl groups.

### More particularly:

(1) 4-nitrobenzoic acid is dissolved in an excess of the desired 1,6-dihydroalkane, preferably 1.6-dihydroxyhexane, in the presence of a suitable esterification catalyst. Suitable catalysts include, but are not necessarily limited to titanium alkoxides, tin alkoxides, sulfonic acid, and the like. A preferred catalyst is Ti(OBu)₄. The dissolution occurs at atmospheric pressure at a temperature of from about 120 °C to about 140 °C, with stirring. If excess alcohol is used, the majority product is the 6-hydroxyalkyl ester of 4-nitrobenzoic acid plus some bis 1,6-(4-nitrobenzoyloxy) alkane, preferably 1,6-(4-nitrobenzoyloxy) hexane. The byproduct water is removed using suitable means, preferably under vacuum during the course of the reaction.
(2) One or more suitable solvents are added to the reaction mixture, along with alkali salts of diols. Suitable solvents include, but are not necessarily limited to aprotic solvents in which nucleophilic attack is preferred. Examples include, but are not necessarily limited to dimethyl sulfoxide (DMSO), dimethyl formamide (DMF), dimethyl acetamide (DMAC), hexamethyl phosphonamide (HMPA). A preferred solvent is dimethylsulfoxide (DMSO), which is environmentally safe and relatively inexpensive. Suitable salts comprise cations effective to displace hydrogen and to produce the mono-cation salt of the alkanediol, preferably the nucleophilic monosodium salt of hexanediol, in the presence of excess alkyldiol, preferably hexanediol. Preferred salts include, but are not necessarily limited to NaH or KOBu^{t}. The salt of the alkane diol, preferably hexane diol, then displaces the activated nitro group to produce 4-(1-hydroxyalkyloxy)benzoic acid (1-hydroxyalkyl ester) and some of the dimeric compound. A preferred product is 4-(1-hydroxyhexyloxy)benzoic acid (1-hydroxyhexyl ester) and some of the dimeric compound. See N.Kornblum et al., J. Org. Chem., **41**(9), 1560 (1976), (nucleophilic displacement of nitro- group).
(3) The mixture from (2) is diluted with an aqueous base and heated to completely cleave the aryl-alkyl ester to produce the desired 4-(6'-hydroxyakyloxy)benzoic acid by precipitation subsequent to acidification. Suitable aqueous bases include, but are not necessarily limited to inorganic bases, a preferred base being aqueous sodium hydroxide. Suitable acids include, but are not necessarily limited to inorganic acids, a preferred acid being hydrochloric acid. In a preferred embodiment, 4-(1-hydroxyhexyloxy)benzoic acid (1-hydroxyhexyl ester) is diluted with aqueous sodium hydroxide and then acidified using hydrochloric acid to produce 4-(6'-hydroxyhexyloxy)benzoic acid. The supernatant contains sodium chloride and nitrite, which can be removed and recovered by vacuum evaporation of the solvent. In a preferred embodiment, the solvents evaporated are DMSO, hexanediol and water, which may be discarded. DMSO and hexanediol can be recovered from the water phase by known distillation procedures.
(4) In a preferred embodiment, for small scale procedures, a quantitative conversion of the 4-(6'-hydroxyalkyloxybenzoic acid to 4-(6'-chloroalkyloxy)benzoyl chloride is accomplished by mixing with thionyl chloride diluted in a suitable solvent, preferably toluene, in the presence of pyridine base. In a preferred embodiment, 4-(6'-hydroxyhexyloxy)benzoic acid is converted to 4-(6'-chlorohexyloxy)benzoyl chloride in this manner. On a larger scale, the foregoing reaction is implemented with simple addition of SOCl₂ and venting of the byproduct SO₂ and HCl.
(5) The highly reactive 4-(6'-chloroakyl)benzoyl chloride is coupled to a hydroquinone bearing the desired bulky group, R². In a preferred embodiment, 4-(6'-chlorohexyl)benzoyl chloride is mixed at room temperature with t-butyl hydroquinone in ether with pyridine, used as catalyst and as a base to take up released HCl, to form bis 1,4 [4"-(6'-hydroxyhexyloxy) benzoyloxy] t-butylphenylene. The reaction is quantitative and produces a high yield of the desired product. In addition, the bis 1,4 [4"-(6'-chloroalkloxy) benzoyloxy] R²- phenylene, preferably bis 1,4 [4"-(6'-chlorohexyloxy) benzoyloxy] t-butyl phenylene, is easily purified from the reaction mixture by crystallization. In addition, the bischlorocompound is stable and need not be stabilized against polymerization (as must bis-alkene compounds).
(6) The bischlorocompound is hydrolyzed to the platform molecule, preferably bis 1,4 [4"-(6'-chlorohexyloxy)benzoyloxy] t-butylphenylene, by simple heating in an aprotic solvent in the presence of water and potassium bromide [R.O. Hutchins and I.M. Taffer, J.Org. Chem, **48,** 1360 (1983)]. Again, the reaction is quantitative with the product being purified by recrystallization. The reaction can be stopped at intermediate times to produce any desired mixture of monofunctional and difunctional alcohol molecules. In addition, the chloro-terminated molecules can be converted to the more reactive iodo-terminated species by simple exchange with NaI in acetone.
(7) The dialcohol or mixed alcohol/alkyl chloride is easily reacted with one or more polymerizable groups, preferably Michael addition reactants. In a preferred embodiment, one or more of the dialcohol ends is reacted with alkenyl chlorides to form reactive alkenyl esters, which can have any ratio of alkenyl ester, halide, or alcohol termini. The ratio can be adjusted to adjust the crosslink density and the liquid crystal transition temperatures.

### Selective Ether Cleavage

In a preferred embodiment, 4-alkoxy benzoyl chloride, preferably commercially available 4-methoxy benzoyl chloride, is reacted with a hydroquinone substituted with a desired R² group to produce the corresponding aromatic ester, bis 1,4 [4-alkoxybenzolyoxy] phenylene, preferably bis 1,4 [4-methoxybenzolyoxy] phenylene. The reaction takes place in the presence of an appropriate HCl scavenger and solvent. Suitable HCl scavengers include, but are not necessarily limited to aromatic and aliphatic amines, with a preferred HCl scavenger being pyridine. The pyridine also may be used in combination with a trialkyl amines having from about 2-4 carbon atoms, preferably triethyl amine.

In a second "step," the alkoxy group is cleaved to result in a reactive hydroxyl group while leaving the aromatic ester and thus the triaromatic mesogen structure intact. See M. Node et al., J. Org. Chem., **45**, 4275 (1980)] (Figure 7a). Node suggests that the methyl ether of bis 1,4 [4-methoxybenzolyoxy] phenylene can be selectively cleaved in the presence of a nucleophile, preferably a thiol, and a Lewis acid, such as aluminum chloride, to produce bis 1,4 [4-hydroxybenzoyloxy] phenylene. [See M. Node et al., J. Org. Chem., **45**, 4275 (1980)] ("Node"). However, Node describes cleaving methyl ethers in the presence of aliphatic esters--not in the presence of aromatic esters. In initial experiments using the conditions described in Node, the more unstable aromatic esters underwent significant ester cleavage because the product complex remained in solution where additional reaction can occur.

Surprisingly, selective cleavage of the aliphatic ether in the presence of the aromatic esters was induced at low temperatures using much higher methyl ether concentrations than those described in Node. Using high concentrations of the ether and much lower concentrations of the nucleophile induced a "complex"-- containing the dihydroxy product with intact aromatic ester bonds--to precipitate from the reaction mixture at short reaction times as the complex was formed. The precipitated complex decomposed to the desired dihydroxy compound by reacting the complex with water and/or alcohol.

Suitable nucleophiles for use in the reaction include, but are not necessarily limited to aliphatic thiols. Preferred nucleophiles are liquid alkanethiols, which typically have 11 carbon atoms or less. A most preferred nucleophile is ethane thiol.

Preferably, a minimum amount of thiol is used to dissolve aluminum chloride in the presence of the ether and a solvent. A most preferred embodiment uses at least 1 mole of thiol per mole of alkyl ether, preferably 2 moles of thiol per mole of alkyl ether. A most preferred embodiment uses 7 mmol of the methyl ether per ml of ethane thiol.

The aluminum chloride to ether ratio should be 4:1 or more, as this appears to be the ratio needed for complexation. At ratios of aluminum chloride to thiol of above 5, more of the complex will stay in the solution before saturation occurs thus resulting in aromatic ester cleavage and reduced yield. The use of less aluminum chloride will result in an incomplete cleavage of the methyl ether. The use of more aluminum chloride, in excess of 4 to 1, has shown no effect in increasing the reaction rate, but slight excesses such as 4.5 to 1 can compensate for residual water in the system.

Suitable solvents for use in the reaction are halogenated solvents, preferably chlorinated solvents, most preferably dichloromethane. The solvent concentration can range from a molar excess of from about 3 to about 7, preferably about 5 or more, in relation to the nucleophile (thiol), as needed to keep the solution in a slurry as precipitate forms. However, dichloromethane above a 5 molar excess should be added slowly as the reaction proceeds since high initial concentration of the methylene chloride will hinder the reaction rate.

The reaction preferably is started under dry conditions at about 0 °C but can be allowed to warm to room temperature (~25 °C) as it proceeds. The reaction should not go above room temperature or ester cleavage can occur.

Upon increasing methyl ether concentration to 35X the concentrations used by Node, the solubility limit of the product complex was exceeded, permitting the complex to crystallize out of the reaction mixture before the aromatic esters had an opportunity to cleave. Quantitative yields were obtained when the complex crystallized directly from the reaction mixture, effectively removing the molecule from further reaction that would form side products:

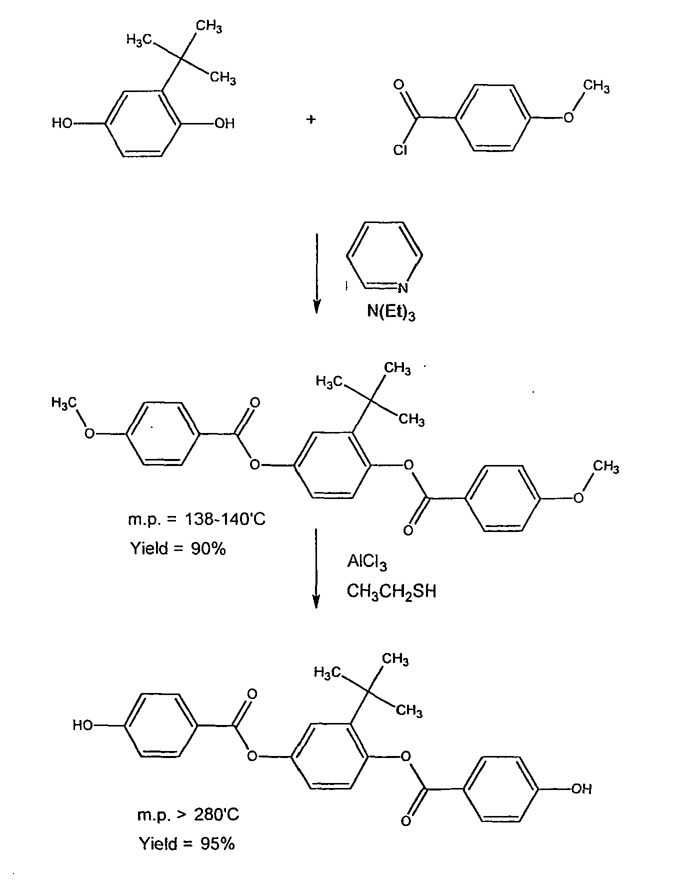

The diphenolic platform mesogens can be lengthened by reacting additional 4-methoxy benzoyl chloride with bis 1,4 [4'-methoxybenzoyloxy] t-butylphenylene to produce the dimethoxy compound with four or five aromatic rings, depending upon the reactant ratios. Cleavage with Lewis acid and thiol produces the respective elongated diphenolic platform molecules: 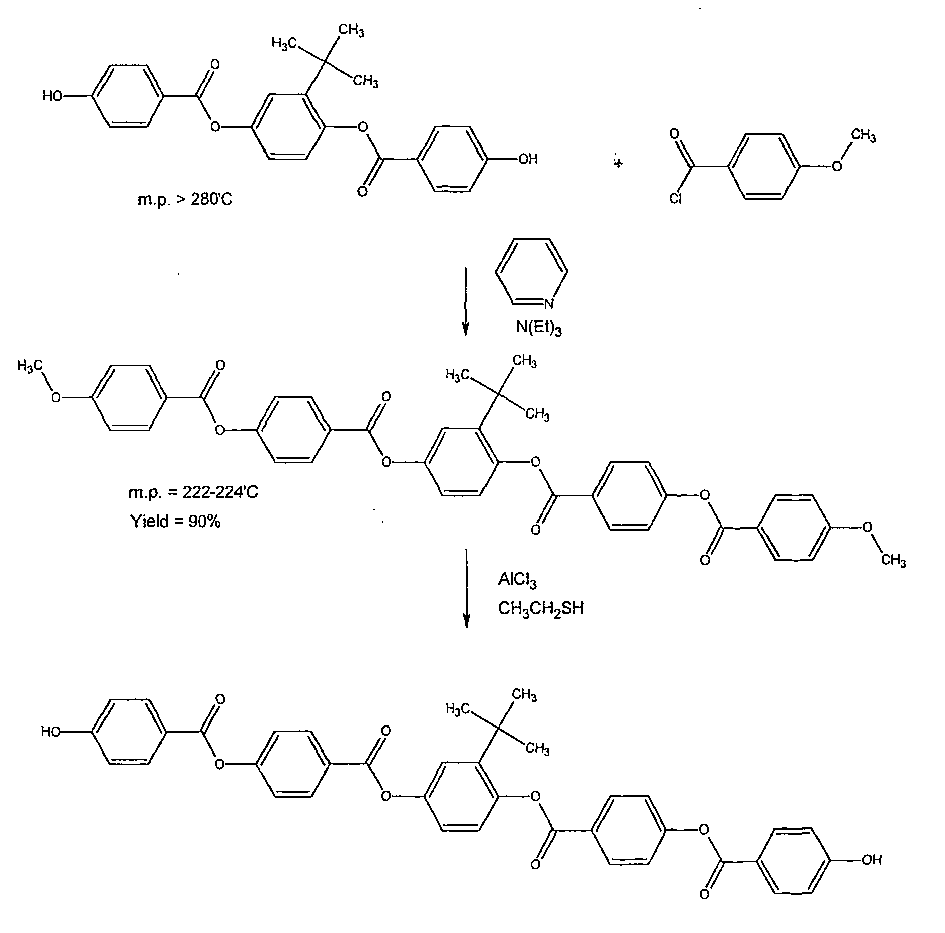 The phenolic end group(s) are esterified by acyl chlorides, thus providing a route to polymerizable mesogens. For example, reaction of C0[H,TB,H](OH)₂ with methacryloyl chloride formed the monoester which was coupled to bifunctional sebacoyl chloride to form an alkyl diester linked, methacrylate terminated liquid crystalline monomer, {C0[H,TB,H] (MeAcry)(O) }₂ (seb) with T_{n->l} of 145°C and a T_{g} of 25°C. This monomer had no tendency to crystallize since the synthesis yielded three different isomers with differing mutual orientation of t-butyl groups. The material is highly viscous, however, making processing close to room temperature, and thus T_{g}, somewhat inconvenient.

### Formation of Dimers

Preferred non-reactive dimeric and polymeric derivatives of C₆[H,TB,H] type mesogenic cores are much more unlikely to crystallize [S. Lee et al., Macromol., 27(14), 3955 (1994)]. In addition, blends of non-reactive dimeric with monomeric derivatives (C₆[H,TB,H](Me)₂ generated a phase diagram with isotropic, isotropic + nematic and finally, at the lowest temperatures, a nematic phase. Adding polymer to the monomer substantially increases T_{n->n+1}.

Briefly, in order to make the dimer molecule, a second mesogenic, platform molecule, 1,4 [4'- hydroxybenzoyloxy] t-butylphenylene, C0[H,TB,H](OH)₂, is synthesized by coupling p-anisoyl chloride with t-butyl hydroquinone and then cleaving the methoxy end groups, as described above, preferably using ethanethiol and aluminum chloride. This molecule can be further extended by reaction with p-anisoyl chloride and the same methoxy cleavage reaction. Fully aromatic diphenol terminated mesogens of any length can be thus produced.

Reaction of C0[H,TB,H](OH)₂ with a less than stoichiometric amount of methacryloyl chloride forms the monoester and diester. The monoester and diester are washed away from the diphenol starting material with methylene chloride and the monoester is separated from the diester as an insoluble solid by diluting the methylene chloride solution into hexane.

The monoester can be coupled to bifunctional sebacoyl chloride to form an alkyl diester linked, methacrylate terminated liquid crystalline monomer, {C0[H,TB,H] (MeAcry)(O) }₂ (seb) with T_{n->1} of 145°C and a T_{g} of 25°C. This monomer has no tendency to crystallize since the synthesis yields three different isomers with differing mutual orientation of t-butyl groups. However, processing close to room temperature, and thus T_{g}, is inconvenient because of the high viscosity of the material.

The following is a ChemSketch 4 rendition of the minimum energy conformation of {C0[H,TB,H] (MeAcry)(O) }₂ (seb). As expected the most stable conformation is an extended form with a very high molecular length to width ratio which is likely to form high T_{n->l} liquid crystal monomers.

A minimum energy conformation of a preferred mesogenic dimer is decanedioic acid bis-(4-{2-tert-butyl-4-[4-(2-methyl-acryloyloxy)-benzoyloxy]-phenoxycarbonyl}-phenyl) ester {C0[H,TB,H] (MeAcry)(O) }₂ (seb):

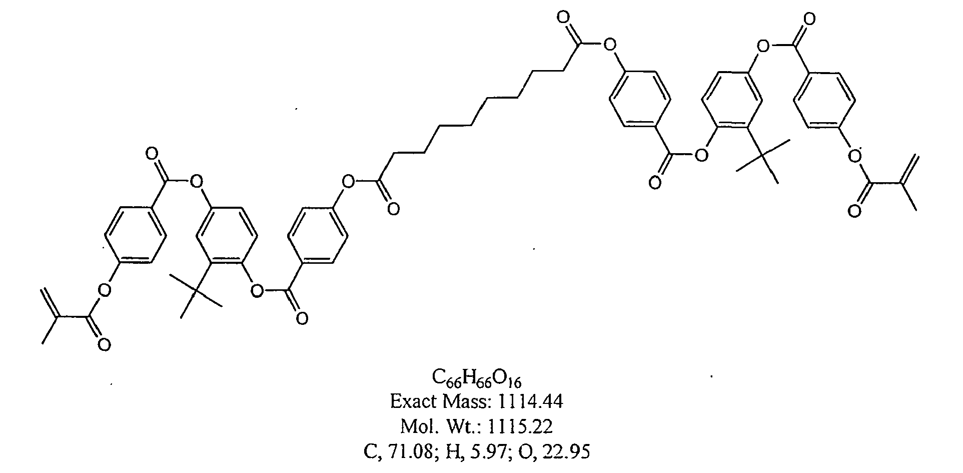

Alternately, the partially or completely methacryloylated or acryloylated versions of decanedioic acid bis-(4-{2-tert-butyl-4-[4-(hydroxy)-benzoyloxy]-phenoxycarbonyl}-phenyl) ester and decanedioic acid bis-(4-{2-tert-butyl-4-[4-(2-methyl-acryloyloxy)-benzoyloxy]-phenoxycarbonyl}-phenyl) ester are made as illustrated below:

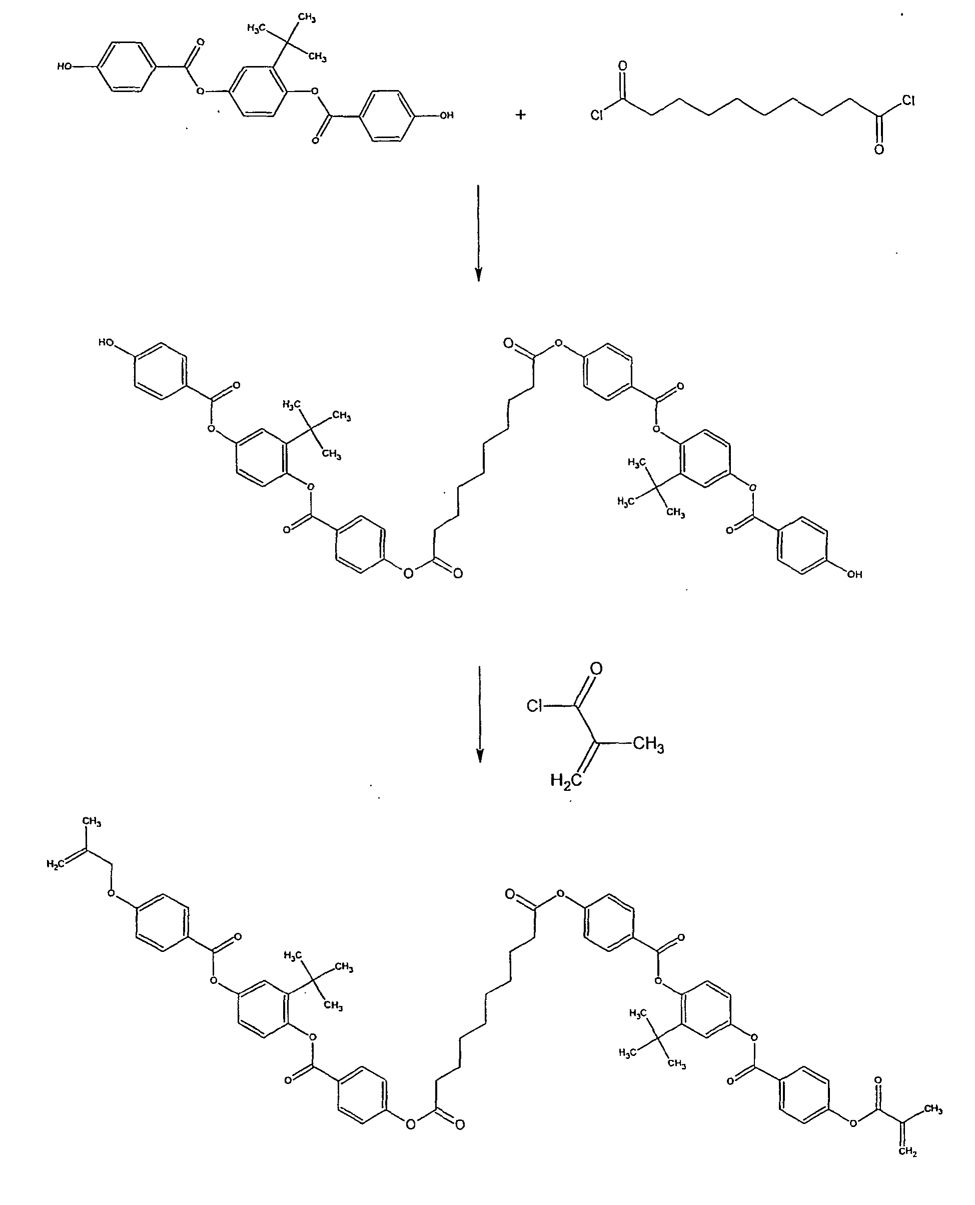

The first reaction product in the above figure is a novel alkylenedioic bis-(4-{2-alkyl-4-[4-(hydroxy)-benzoyloxy]-phenoxycarbonyl}-phenyl) ester having the following general structure: 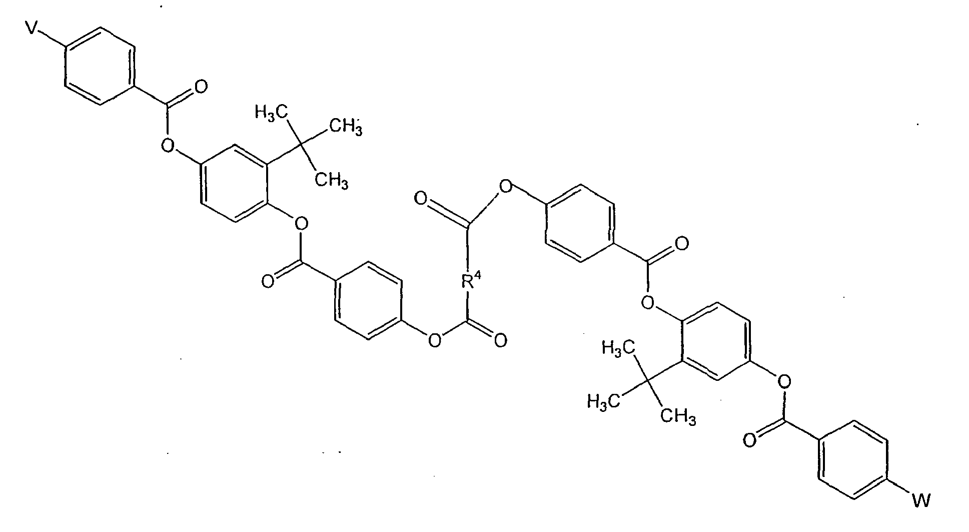 wherein
- R⁴ has: from about 2 to about 20 carbon atoms, preferably from about 2 to about 12 carbon atoms, and most preferably from about 6 to about 12 carbon atoms.
the alkyl substituent on the central aromatic group of the aromatic ends includes, but is not necessarily limited to t-butyl groups, isopropyl groups, and secondary butyl groups. Most preferred are t-butyl groups; and,
- V and W: are selected from the group consisting of terminal functionalities and polymerizable groups. In platform molecules, V and W are terminal functionalities. In polymerizable mesogens, V and/or W are polymerizable groups.

The same procedures may be used to make mesogens having the following general structure: 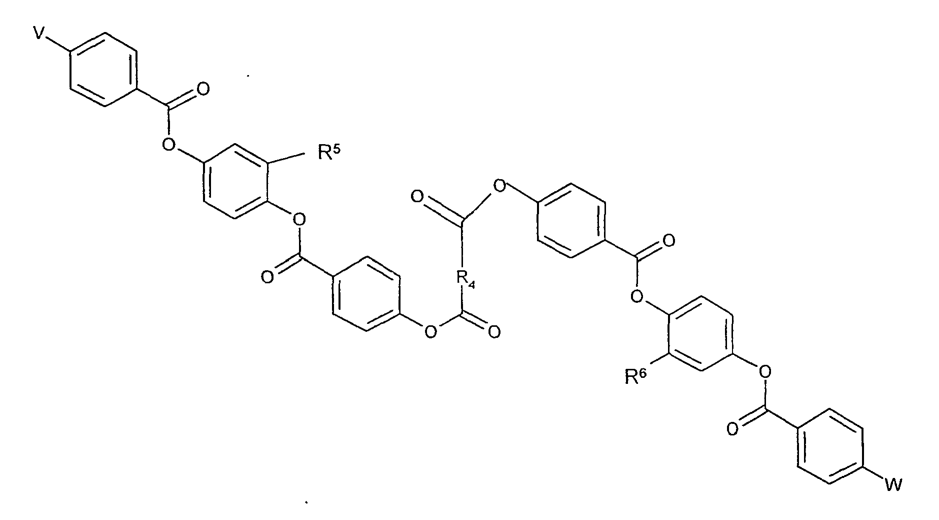 wherein
- R⁵ and R⁶: are selected from the group consisting of hydrogen, halogen, alkyl groups having from about 1 to 6 carbon atoms, and aryl groups; and,
- V and W: independently are selected from the groups comprising polymerizable groups and terminal functionalities.

Suitable terminal functionalities independently are selected from the group consisting of hydroxyl groups, amino groups, and sulfhydryl groups. Most preferred terminal functionalities are hydroxyl groups.

Suitable polymerizable groups may be polymerized by either nucleophilic addition, free radical polymerization, or a combination thereof. Preferred polymerizable groups are polymerizable by Michael addition. Michael addition requires the addition of a nucleophile and an electron deficient alkene. Groups suitable for polymerization by Michael addition include but are not necessarily limited to the examples found in A. Michael, *J. Prakt. Chem. [2] **35,** 349 (1887)*; R. Connor and W. R. McClelland, *J. Org. Chem.,* **3**, 570 (1938); and C. R. Hauser, M. T. Tetenbaum, *J. Org. Chem.,* **23,** 1146 (1959).

Examples of suitable polymerizable groups include, but are not necessarily limited to substituted and unsubstituted alkenyl ester groups comprising a polymerizable unsaturated carbon-carbon bond, wherein said alkenyl group has from about 2 to about 12 carbon atoms, preferably from about 2 to about 9 carbon atoms, more preferably from about 2 to about 6 carbon atoms. Preferred alkenyl esters are acryloyloxy groups and methacryloyloxy groups. V and W may be the same or different, depending upon the application. In a preferred application--a dental application--V and W comprise terminal alkenyl groups.

These alkylenedioic bis-(4-{2-alkyl-4-[4-(hydroxy)-benzoyloxy]-phenoxycarbonyl}-phenyl) esters are novel compounds, and may be used as "platform molecules," or polymerizable mesogens. A most preferred alkylenedioic bis-(4-{2-alkyl-4-[4-(hydroxy)-benzoyloxy]-phenoxycarbonyl}-phenyl) ester is decanedioic acid bis-(4-{2-tert-butyl-4-[4-(hydroxy)-benzoyloxy]-phenoxycarbonyl}-phenyl) ester.

In order to make the dihydroxyaromatic terminated mesogens, 1,4 bis(4'-hydroxybenzoyloxy) t-butylphenylene or bis-(4-{2-tert-butyl-4-[4-(hydroxy)-benzoyloxy]-phenoxy carbonyl}- phenyl) ester is dissolved in a solvent at a ratio of about 10 ml. solvent per gram. The material is dissolved in the solvent under an inert gas, preferably dry nitrogen. Suitable solvents are heterocyclic bases, with a preferred solvent being pyridine. This first mixture is diluted with a chlorinated organic solvent, preferably methylene chloride, in an amount equal to the volume of pyridine.

A second mixture is formed by dissolving an alkyloyl chloride in a chlorinated organic solvent at a ratio of about 10 ml solvent per gram of alkyloyl chloride. A preferred chlorinated organic solvent is methylene chloride. The alkyloyl chloride comprises an alkyl portion having from about 2 to about 20 carbon atoms, preferably from about 6 to about 20 carbon atoms, more preferably from about 6 to about 12 carbon atoms, and most preferably is sebacoyl chloride. This second mixture includes at least some of benzoquinone inhibitor, suitable concentrations being from about 1 to about 100 ppm, with a preferred concentration being about 10 ppm. The second mixture is added slowly to the first mixture with stirring, preferably with a syringe through a suba seal. After about 24 hours at room temperature, a precipitate is seen. The solvent, preferably methylene chloride and pyridine, are pumped off.

Any remaining pyridine is converted to a salt using a suitable acid, preferably hydrochloric acid, and the salt is removed by washing with water. Water is filtered off from the remaining white precipitate. Residual water is removed using a suitable solvent, preferably acetone, to dissolve the remaining precipitate, which is then stirred with a suitable amount of magnesium sulfate. The solution is dried down and a dissolved in a chlorinated organic solvent, preferably methylene chloride (DCM), is added to dissolve the solid. After 24 hours at room temperature the unreacted 1,4 bis(4'-hydroxybenoyloxy) t-butylphenylene crystallizes out of solution as a white precipitate and separated from the mixture. The solution was then placed in the freezer overnight and decanedioic acid bis-(4-{2-tert-butyl-4-[4-(hydroxy)-benzoyloxy]-phenoxycarbonyl}-phenyl) ester precipitates out of solution. Silica and basic alumina may be added to absorb any remaining methacrylic acid or carboxylic acid terminated products.

Aromatic terminated mesogens (herein called "mesogenic dimers"), such as the foregoing, are used as a diluent and blended with the aliphatic terminated mesogens (herein called polymerizable mesogen) to form the polymerizable mixture. The quantity of mesogenic dimer in the blend will vary depending upon the dimer and its impact on transition temperature, final product, etc.

### -Reaction of dimethyl amine or dichloro terminated oligodimethylsiloxanes with the mono methacrylate ester of 1,4 [4'-hydroxybenzoyloxy] t-butylphenylene

Molecules with high temperature stability can be prepared by reacting dimethyl amine or dichloro terminated oligodimethylsiloxanes with the mono methacrylate ester of 1,4 [4'-hydroxybenzoyloxy] t-butylphenylene, as shown below:

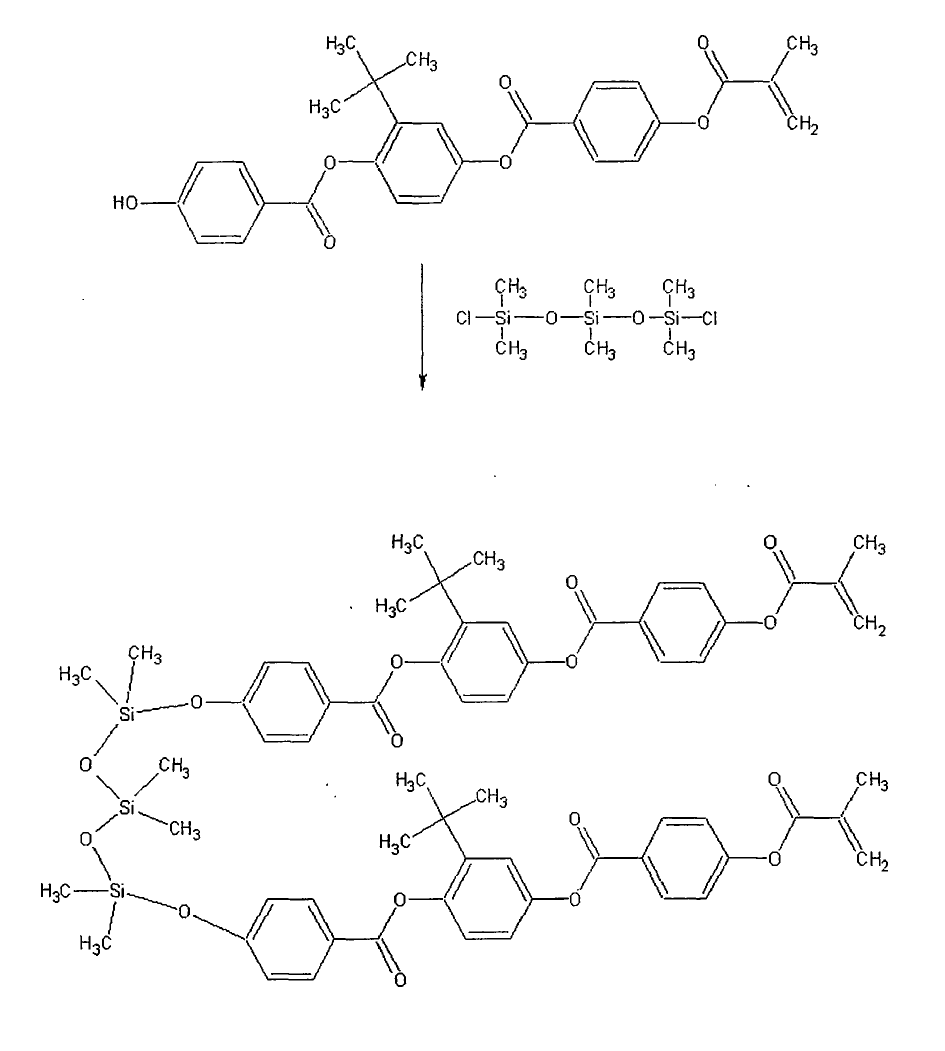

In this embodiment, the mesogenic platform molecule 1,4 [4'-hydroxybenzoyloxy] t-butylphenylene is further extended by reaction with p-anisoyl chloride and subsequent ether methyl group cleavage with aluminum chloride and ethane thiol. Fully aromatic diphenol terminated mesogens of any length can be thus produced. Reaction with acryloyl or methacryloyl chloride forms the monoester, which can be coupled to reactive aliphatic or siloxane oligomers to form polymerizable liquid crystals with reactive ends.

### Formation of alkoxy terminal functionalities

In order to produce alkoxy functionalities, an excess of anisoyl chloride is mixed with a desired 1,4 bis(4'-hydroxybenzoyl oxy)-R² phenylene, (preferably a t-butylphenylene) in an excess of pyridine and triethyl amine (about a 10:1 1 ratio) with stirring under nitrogen for several hours, preferably about 4hr. The pyridine is removed under vacuum, and the mixture is extracted into ethyl ether. Amine hydrochloride is removed by vacuum filtration and the remaining solids are washed with a suitable solvent, such as water and acetone. The product had a melting point of 222-224 °C and the structure of the molecule was confirmed by NMR to be the aromatic dimethoxy compound.

### Low Polymerization Shrinkage

The mesogens exhibit low polymerization shrinkage. Polymerization shrinkage is measured by codissolving the monomers in dichloromethane with 0.3 wt.% camphorquinone photoinitiator, 100 ppm benzoquinone and 1 wt.% N,N' dimethylaminoethyl methacrylate activator and subsequently pumping off the solvent, all under yellow light. The monomers are then polymerized in film or droplet form in less than 1 minute by exposure to a dental curing light (Dentsply Spectrum Curing Lamp) with a significant output at 420 nm.

FTIR spectroscopy (Nicolet Magna-IR 560) is used to measure the degree of cure by observing the decrease in the 1637 cm⁻¹ alkene band vs. the aromatic internal thickness band at 1603 cm⁻¹. Thin film measurements that avoid oxygen inhibition are performed by sandwiching the monomer between polyvinylidene chloride films, which have an optical window in the wavelength region of interest. The IR spectrum of solid droplets is evaluated using a single bounce reflectance measurement. The flat bottom surface of the droplet is pressed against the germanium lense of a Spectra Tech Thunderdome attachment.

Polymerization of the monomers can be observed between transparent polyvinylidene chloride films under cross-polarized optical microscopy in the heated stage of a Nikon Optimat microscope. Little change in the local birefringence and thus local orientation is noted upon polymerization at room temperature or upon heating to 180° C.

### Fracture Toughness

Compact tension samples (ASTM E399) with known edge crack length are fabricated by photocuring monomer with initiator and activator in silicone molds. After polishing the surface with 600 grit polishing agent and soaking in physiologic saline at 37 °C for 24 hours the samples are tested at room temperature under displacement control at 1mm/min until failure.

The fracture toughness of the crosslinked, amorphous glass is as high as possible, suitably 0.4 Mpa-m^{1/2} or higher, preferably 0.5 MPa-m^{1/2} or higher, which is the same as that found for photocured, isotropic dimethacrylate based resins such as GTE resin (3M company).

### Fillers

Considerable amounts of soluble impurity can be added to the polymerizable mesogens, or a mixture comprising the polymerizable mesogens, without changing the T_{nematic->isotropic} transition temperature of the polymerizable mesogens. Thus, a high volume fraction of filler can be added to the polymerizable mesogens and still form a composite that maintains desirable, low viscosity flow and low polymerization shrinkage characteristics at temperatures of curing. Commercial products add up to about 70-80 wt% filler. A preferred embodiment uses about 30 wt.% filler.

A variety of fillers may be used. A preferred filler is amphoteric nano-sized metal oxide particles having a diameter in nanometers which is sufficiently small to provide transparency effective for photopolymerization but sufficiently large to provide effective fracture toughness after photopolymerization. Substantially any "metal" capable of forming an amphoteric metal oxide may be used to form the metal oxide particles. Suitable metallic elements include, but are not necessarily limited to niobium, indium, titanium, zinc, zirconium, tin, cerium, hafnium, tantalum, tungsten, and bismuth. Also suitable in place of the metal in the oxide is the semi-metallic compound, silicon. As used herein, unless otherwise indicated, the term "metal oxide" is defined to include silicon, and the word "metal," when used to refer to the metal oxide is intended to also refer to silicon.

The metal oxides may be made of a single metal, or may be a combination of metals, alone or combined with other impurities or "alloying" elements, including, but not necessarily limited to aluminum, phosphorus, gallium, germanium, barium, strontium, yttrium, antimony, and cesium.

A monomeric liquid crystal (LC) containing a high volume fraction of filler nanoparticles is a highly constrained system. As a result, at least for some monomeric species, both smectic and crystalline transitions should be suppressed. The consequent widening of the stability range of nematic mesophase should permit the composite to polymerize at much lower temperatures than in unfilled systems, resulting in lower polymerization shrinkage.

The metal oxide nanoparticles may be prepared using any known methods, such as "sol-gel" techniques, direct hydrolysis of metal alkoxides by water addition, forced hydrolysis of relatively low-cost metal salts, or non-hydrolytic reactions of metal alkoxides with metal halide salts. Examples of such procedures are shown in the following references: WO 98 13008 A1; W. Stöber and A. Fink, J. of Colloid and Interface Science, v. 26, 62-69 (1968); M.Z.-C. Hu, M.T. Harris, and C.H. Byers, J. of Colloid and Interface Science, v. 198, 87-99 (1988); M. Ocaña and E. Matijević, J. of Materials Research, v. 5(5), 1083-1091 (1990); L. Lerot, F. LeGrand, P. de Bruycker, J. of Materials Science, v. 26, 2353-2358 (1991); H. Kumazawa, Y. Hori, and E. Sada, The Chemical Eng'g. Journal, v. 51, 129-133 (1993); S. K. Saha and P. Pramanik, J. of Non-Crystalline Solids, v. 159, 31-37 (1993); M. Andrianainarivelo, R. Corriu, D. Leclercq, P.H. Mutin, and A. Vioux, J. of Materials Chemistry, v. 6(10), 1665-1671 (1996); F. Garbassi, L. Balducci, R. Ungarelli, J. of Non-Crystalline Solids, v. 223, 190-199 (1998); J. Spatz, S. Mössmer, M. Mo[umlaut]ller, M. Kocher, D. Neher, and G. Wegner, Advanced Materials, v. 10(6), 473-475 (1998); R. F. de Farias, and C. Airoldi, J. of Colloid and Interface Science, v. 220, 255-259 (1999); T. J. Trentler, T. E. Denler, J. F. Bertone, A. Agrawal, and V.L. Colvin, J. of the Am. Chemical Soc., v. 121, 1613-1614 (1999); Z. Zhan and H.C. Zheng, J. of Non-Crystalline Solids, v. 243, 26-38 (1999); M. Lade, H. Mays, J. Schmidt, R. Willumeit, and R. Schomäcker, Colloids and Surfaces A: Physiochemical and Eng'g Aspects, v. 163, 3-15 (2000); and the procedure described in "Sol-gel processing with inorganic metal salt precursors," authored by "Michael" Zhong Cheng Hu, licensable via Oak Ridge National Laboratory under ORNL control number ERID 0456.

The application will be better understood with reference to the following examples, which are illustrative only:

### Example 1

### Synthesis of 4-nitrophenylenecarbonyloxy 6'-hexane-1'-ol

60 g 4-nitrobenzoic acid (0.4 mole) was dissolved in 250 ml (2.07 mole) dry hexanediol that had been fused in the reaction vessel at 165 °C. 1 ml. tetrabutyltitanate catalyst was added, and the mixture was stirred for 3 hours at 135 °C before cooling to 95 °C where stirring was continued under dynamic vacuum for two days to remove the water of condensation.

The solution was extracted with 1 liter diethyl ether, centrifuged or filtered to remove the catalyst, and then washed two times with 500 ml 5% NaHCO₃ to remove unreacted acid and excess diol. After the ether was vacuum evaporated, the residue was dissolved in 150 ml boiling ethanol to which 75 ml water was added. Upon cooling to room temperature bis 1,6-(4 nitrophenylene carbonyloxy)hexane precipitated as 7.61 grams of a yellow powder (Tₘ = 112 °C).

The remaining solution was evaporated and redissolved in 150 ml diethyl ether to which was added 75 ml hexane. After crystallization at -20 °C 4-nitrophenylene 4-carbonyloxy 6'-hexane-1'-ol (86.7 grams) was isolated (Tₘ=32-35 °C). NMR indicated that both of these products were greater than 98% purity.

### Example 2

### Synthesis of 4-(6-hydroxyhexyloxy)phenylenecarbonyloxy 6'-hexane 1'-ol

20 ml (0.166 mole) of dry, molten hexanediol was transferred to a flask with an attached short path distillation unit. 200 ml dry dimethylsulfoxide (DMSO) and then 40 ml of 1M KOBu^{t} was then added to the diol and stirred 45 minutes at room temperature. The Bu^{t}OH and a small amount of DMSO were distilled off under vacuum between 25-50 °C over one hour. 8ml (0.04 mole) of dry 4-nitrophenylenecarbonyloxy 6'-hexane-1'-ol was added producing a bright blue color that converted to a yellow coloration after 2 hours.

After stirring overnight, the DMSO and excess hexanediol was removed by vacuum distillation at 90 °C, whereupon the residue was taken up in 200 ml diethyl ether which was washed twice with 200 ml 5% NaHCO₃ and dried with MgSO₄. After the ether was distilled away, the solid was dissolved in a minimum amount of boiling ethanol and crystallized at -20°C. A 75-90% yield of the desired white product was obtained (Tₘ =30-33°C).

### Example 3

### Synthesis of 4-[6-hydroxyhexyloxy] benzoic acid

1.2 g (0.0037 mole) 4-(6-hydroxyhexyloxy)phenylenecarboxyoxy 6'-hexane 1'-ol was heated for 8 hours at 90 °C in a solution of 0.29 g (0.0074 mole) NaOH in 4 ml water. 20 ml of water was added to the clear solution and 0.3 ml of concentrated HCl added to precipitate the acid at pH=3-5. The white solid was filtered off and dried under vacuum to produce a quantitative yield of the substituted benzoic acid (Tₘ=117°C).

### Example 4

### Synthesis of 4 (6'-chlorohexyloxy) benzoyl chloride

A three times molar excess of thionyl chloride (55ml) in toluene (300ml) was dropwise added over 20 minutes to 4-(6'-hydroxyhexyloxy)benzoic acid (60g, 0.252 mole) suspended in toluene (600ml) with a stoichiometric amount of pyridine (42 ml) at 0 °C. The suspension was continuously stirred for another 8 hours at room temperature, whereupon the toluene and excess thionyl chloride were distilled off at 70-100 °C with a slight nitrogen flow. The remaining slush of the pyridine hydrochloride and product was extracted with 11 boiling hexane and mixed with 5 g basic alumina and 5g neutral silica and filtered hot. A 90% yield of a very light yellow 4-(6'-chlorohexyloxy)benzoyl chloride liquid was obtained after evaporation of the hexane (Tₘ<20°C).

### Example 5

### Synthesis of bis 1,4 [4"-(6'-chlorohexyloxy)benzoyloxy] t-butylphenylene

65g of 4-(6'-chlorohexyoxy)benzoyl chloride (0.23 mole) was added to 16.75 g (0.1 mole) of t-butyl hydroquinone dissolved in 800 ml dry diethyl ether. 10 ml pyridine and 32 ml triethylamine were then added to this mixture. After stirring for 20 hours, the ether was filtered and washed two times with 200 ml 0.1N HCl and 200 ml saturated NaCl solution. The ether solution was then mixed with 10g basic alumina to remove unreacted acid and 10 g neutral silica to flocculate the suspension and dried over magnesium sulfate. The product starts to crystallize from the ether when the solution is reduced by half. After continued crystallization at -20 °C overnight 63 g of product melting at 95-100 °C could be obtained. Another crop of crystals was obtained by further reducing the solution and crystallizing at -20°C over one week. NMR purity was >99%.

### Example 6

### Synthesis of bis 1,4 [4"-(6'-iodohexyloxy)benzoyloxy] t-butylphenylene

1.15 g (0.0016 mole) bis 1,4 [4"-(6'-chlorohexyloxy)benzoyloxy] t-butylphenylene dissolved in 20 ml acetone was boiled under nitrogen with 8.0 g NaI in 20 ml acetone for 20 hours. A quantitative yield of bis 1,4 [4"-(6'-iodohexyloxy)benzoyloxy] t-butylphenylene was obtained. The material melted at 76 °C and was >99% pure by NMR.

### Example 7

### Synthesis of bis 1,4 [4"-(6'-hydroxyhexyloxy)benzoyloxy] t-butylphenylene

36 g of bis 1,4 [4"-(6'-chlorohexyloxy)benzoyloxy] t-butylphenylene was dissolved in 750 ml of n-methypyrrolidinone (NMP) in a single neck flask. 15g KBr and 120 ml water were then added. The flask was then wired shut with a suba seal, and the solution was heated to 120°C for 24 hours. Upon cooling, the solution was quenched into 1500 ml water and extracted with 250 ml methylene chloride. After evaporation of the methylene chloride, the solid was extracted with 11 of ether and washed with 11 water and dried with MgSO₄. The solution was concentrated and crystallized at -20 °C for 3 days to yield 17 g of white product melting at 80 °C. Additional product crystallized from the solution after several weeks. NMR purity was >99%.

Stopping the above reaction at intermediate times yielded mixtures of di-OH terminated, and asymmetric monochloro, monohydroxy compounds.

### Example 8

### Synthesis of bis 1,4 [4"-(6'-methacryloyloxyhexyloxy)benzoyloxy] t-butylphenylene

10 g (0.0165 mole) bis 1,4 [4"-(6'-hydroxyhexyloxy)benzoyloxy] t-butylphenylene was dissolved in 200 ml dry methylene chloride containing 100 ppm benzoquinone (free radical quencher). After cooling the above solution to 0 °C 3.2 ml (0.035 mole) distilled methacryloyl chloride was then added along with 3 ml (0.037 mole) pyridine and the solution was stirred for 24 hours in a sealed flask making no attempt to remove air from the solvent.

The solvent was vacuum evaporated and the resultant solid taken up in 250 ml ether and washed with 250 ml 0.1N H Cl and 250 ml saturated NaCl. After drying with MgSO₄ and filtering, the solvent was evaporated to yield 10 g of the desired product as a nematic liquid, which was >98% pure by NMR. This material could be crystallized from diethyl ether at -20 °C to form a white crystalline solid melting at 57 °C.

### Example 9

### Synthesis of bis 1,4 [4"-(6'-cinnamoyloxyhexyloxy)benzoyloxy] t-butylphenylene

5 g (0.0825 mole) of bis 1,4 [4"-(6'-hydroxyhexyloxy)benzoyloxy] t-butylphenylene was dissolved in 100 ml dry methylene chloride containing 100 ppm benzoquinone (free radical quencher). After cooling the above solution to 0°C, 3.0 g (0.018mole) cinnamoyl chloride was then added along with 1.4 ml (0.017 mole) pyridine, and the solution was stirred for 24 hours in a sealed flask making no attempt to remove air from the solvent.

The solvent was vacuum-evaporated and the resultant solid taken up in 100 ml ether and washed with 100 ml 0.1N HCl and 250 ml saturated NaCl. After drying with MgSO₄ and filtering, the solvent was evaporated to yield 5 g of the desired product which was >98% pure by NMR. This material could be crystallized from diethyl ether at -20°C to form a white crystalline solid melting at 70 °C.

### Example 10

### Synthesis of bis 1,4 [4"-(6'-acetoxyoxyhexyloxy)benzoyloxy] t-butylphenylene

1 g (0.0165 mole) of bis 1,4 [4"-(6'-hydroxyhexyloxy)benzoyloxy] t-butylphenylene was dissolved in 20 ml dry methylene chloride. After cooling the above solution to 0 °C, 0.27 ml (0.0037 mole) acetyl chloride was then added along with 0.3 ml pyridine, and the solution was stirred for 24 hours in a sealed flask.

The solvent was vacuum-evaporated and the resultant solid taken up in 20 ml ether and washed with 20 ml 0.1N HCl and 250 ml saturated NaCl. After drying with MgSO₄ and filtering, the solvent was evaporated to yield the product quantitatively at >98% purity by NMR. This material could be crystallized from diethyl ether at -20 °C to form a white crystalline solid melting at 82 °C.

### Example 11

### Synthesis of 1,4 Bis(4'-methoxybenzoyloxy)t-butylphenylene

Anisoyl chloride (4.93 g, 0.029 mole), t-butyl hydroquinone (2.00 g, 0.012 mole) in pyridine (50 ml) and triethyl amine (3.2 ml) were stirred under nitrogen for 4 hours with the mixture eventually becoming dark orange/red. The pyridine was removed under vacuum and the mixture was precipitated into ethyl ether (500 ml). Amine hydrochloride precipitated out of solution and was removed by vacuum filtration. The ether was evaporated and the slightly yellow crystals were dissolved in chloroform and extracted with slightly acidified water. The color of the crystals was then removed by stirring over basic alumina and the crystals were then purified by recrystallization in isopropanol. 4.8 grams of material was collected (88% yield) with a melting point of 138-140 °C. The structure of the molecule was confirmed by NMR.

### Example 12

### Synthesis of 1,4 Bis(4'-hydroxybenzoyloxy) t-butylphenylene

1,4 Bis(4-methoxybenzoyloxy) t-butylphenylene (0.5 g., 0.00115 mole) and aluminum chloride (1.23 g., 0.00921 mole) were added to ethane thiol (2.5 ml) and dichloromethane (2.5 ml) to form a slightly yellow solution. This mixture was stirred for 1 hour and a white solid precipitated out of solution during this time. The mixture was precipitated into 200 ml of water and extracted with ethyl ether. The ether was evaporated and 0.432 grams were recovered, (92% yield). The melting point was not determined, but was found in be in excess of 280 °C.

### Example 13

### Synthesis of 1,4 Bis(4"-(4'-methoxybenzoyloxy)benzoyloxy)t-butylphenylene

The dark orange solution of anisoyl chloride (0.357 g, 2.096 mmole), 1,4 bis(4'-methoxybenzoyloxy) t-butylphenylene (0.355 g, 0.873 mmole) in pyridine (25 ml) and triethyl amine (0.5 ml) were stirred under nitrogen for 4 hr. The pyridine was removed under vacuum, and the mixture was extracted into ethyl ether (200 ml). Amine hydrochloride and the product were insoluble and were removed by vacuum filtration. The amine hydrochloride was removed by washing the solids with water and acetone. The product had a melting point of 222-224 °C and the structure of the molecule was confirmed by NMR.

### Example 14

### Synthesis of 1,4 Bis(4'-methacryloylbenzoyloxy) t-butyphenylene

### and 1-(hydroxybenzoyloxy),4-(4'-methacryloylbenzoyloxy) t-butylphenylene

0.2 g (4.92 X 10⁻⁴ mole) 1,4 bis(4'-hydroxybenzoyloxy) t-butylphenylene was dissolved in 1 ml pyridine containing 10 ppm benzophenone, and to this was slowly added 0.026 ml (2.46 X 10⁻⁴ mole) methacryloyl chloride dissolved in 2 ml methylene chloride. After stirring for 12 hours at room temperature, the methylene chloride was pumped off and the remaining pyridine solution was diluted into 0.1 N HCl to neutralize the pyridine and precipitate the product. After washing the precipitate with water and drying under vacuum, the precipitate was taken up into ether and dried with MgSO₄. After ether evaporation, the suspension was taken up into 3 ml methylene chloride in which the starting diphenol was insoluble. After filtering away the diphenol, the monomethacrylate (Tₘ= 230 °C) was crystallized from the remaining solution at room temperature by the addition of 3ml hexane. The remaining clear solution contained mainly the dimethacrylate in very small amounts (Tₘ= 142°C).

### Example 15

### Synthesis of bis-(4-{2-tert-butyl-4-[4-(2-methyl-acryloyloxy)-benzoyloxy]-phenoxycarbonyl}-phenyl) ester {C0[H,TB,H] (MeAcry)(O) }₂

In order to make decanedioic acid bis-(4-{2-tert-butyl-4-[4-(2-methylacryloyloxy)-benzoyloxy]-phenoxycarbonyl}-phenyl) ester {C0[H,TB,H] (MeAcry)(O) }₂ (seb), 0.95g, 1.95mmole of 1-(hydroxybenzoyloxy),4-(4'-methacryloylbenzoyloxy) t-butylphenylene was dissolved in 10 ml dry pyridine under dry nitrogen and then diluted with 20 ml dry methylene chloride. 0.233g sebacoyl chloride (0.975mmol) was dissolved in 10 ml dry methylene chloride containing 10ppm benzoquinone inhibitor and added slowly with syringe through a suba seal into the first solution with stirring. After 29 hours at room temperature a small amount of precipitate was seen and the methylene chloride was pumped off and 0.01g paradimethylaminopyridine was added as a catalyst to continue the reaction.

After another 24 hours at room temperature, some unconverted phenol was still observed by TLC and 0.5ml methacryloyl chloride was dissolved in 10 ml dry methylene chloride and added to the reaction mixture to react any unconverted starting material to the dimethacrylate. After 3 hours the phenol had been completely converted and methylene chloride was removed under vacuum.

100ml of water containing 7.5ml concentrated HCl was added to the flask with stirring and stirred for four hours to remove the pyridine as the hydrochloride salt (pH=4). The water layer could be poured from the white layer which stuck to the walls of the vessel. After washing once more with deionized water, 100ml methylene chloride was added to dissolve the solid and the resulting organic phase was transferred to a separatory funnel and washed twice with 100ml brine saturated water and dried with magnesium sulfate. One gram each of silica and basic alumina were added to absorb any remaining methacrylic acid or carboxylic acid terminated products.

After standing for 8 hours the methylene chloride solution was filtered and added to 500ml of stirred hexane. After 8 hours the pure precipitated product was collected; the supernatent contained methacrylated starting material.

The white precipitate eluted in 80/20 ether/hexane on silica as a major spot and a very faint following spot. NMR revealed about 95% purity of the desired product (30% yield) with the rest being a methoxy terminated product which was carried over from the diphenol starting material. Solutions could be cast into a translucent, nematic glass at room temperature which gradually softened upon heating.

### Example 16

### Synthesis of Decanedioic acid bis-(4-{2-tert-butyl-4-[4-(hydroxy)-benzoyloxy]-phenoxycarbonyl}-phenyl) ester

18.25g, (44.9mmole) of 1,4 bis(4'-hydroxybenzoyloxy) t-butylphenylene was dissolved in 120 ml dry pyridine under dry nitrogen and then diluted with 100 ml dry methylene chloride. 1.34g sebacoyl chloride (5.60mmol) was dissolved in 20 ml dry methylene chloride and added slowly with syringe through a suba seal into the first solution with stirring. After 24 hours at room temperature a small amount of precipitate was seen and the methylene chloride and pyridine were pumped off

300ml of water containing 7.5ml concentrated HCl was added to the flask with stirring and stirred for four hours to remove the pyridine as the hydrochloride salt (pH=4). The water was filtered off from the white precipitate that formed in the vessel. 200ml of acetone was added to dissolve the mixture which was then stirred with 3 grams of magnesium sulfate to remove any remaining water, after which the solution was dried down. 200ml methylene chloride (DCM) was added to dissolve the solid. After 24 hours at room temperature the unreacted 1,4 bis(4'-hydroxybenoyloxy) t-butylphenylene crystallized out of solution as a white precipitate. The solution was then placed in the freezer overnight and decanedioic acid bis-(4-{2-tert-butyl-4-[4-(hydroxy)-benzoyloxy]-phenoxycarbonyl}-phenyl) ester precipitated out of solution.

The white precipitate eluted in 90/10 DCM/acetone on silica as a major spot and a very faint spots resulting from higher order polymerization. The product had a high NMR purity (>95%)..

### Example 17

### Synthesis of Decanedioic acid bis-(4-{2-tert-butyl-4-[4-(2-methyl-acryloyloxy)-benzoyloxy]-phenoxycarbonyl}-phenyl) ester

0.85g, (0.868mmole) of decanedioic acid bis-(4-{2-tert-butyl-4-[4-(hydroxy)-benzoyloxy]-phenoxycarbonyl}-phenyl) ester was dissolved in 20ml dry pyridine under dry nitrogen and then diluted with 20ml dry methylene chloride. 0.118g methacrylol chloride (1.13mmol) was dissolved in 10 ml dry methylene chloride containing 10ppm benzoquinone inhibitor and added slowly with syringe through a suba seal into the first solution with stirring. After 24 hours at room temperature a small amount of precipitate was seen and the methylene chloride and pyridine were pumped off.

100ml of water containing 1.0ml concentrated HCl was added to the flask with stirring and stirred for two hours to remove the pyridine as the hydrochloride salt (pH=4). The water layer could be poured from the white layer, which stuck to the walls of the vessel. After washing once more with deionized water. 50ml methylene chloride was added to dissolve the solid and the resulting organic phase was transferred to a separatory funnel and washed twice with 100ml brine saturated water and dried with magnesium sulfate. One gram each of silica and basic alumina were added to absorb any remaining methacrylic acid or carboxylic acid terminated products. NMR revealed that the product was the desired dialkene terminated monomer.

### Example 18.

### Bis 1,4 [4-hydroxybenzoyloxy] 2-phenyl-phenylene

(100 g, 0.537 mole) of phenylhydroquinone and (229 g, 1.342 mole) of anisoyl chloride were added to 100 ml of pyridine and 500 ml of dry dichloromethane. The mixture was stirred for 72 hours at room temperature under nitrogen gas until it was mostly solidified. The 1,4 bis [4-methoxybenzoyl 2-phenyl phenylene] was recrystallized from isopropyl alcohol for a 96% yield.

(42.72 g, 0.094 mole) of the 1,4 bis [4-methoxybenzoyl] 2-phenyl phenylene was added to a solution consisting of (100 g, 0.749 mole) of aluminum chloride, (58.21 g, 0.937 mole) of ethane thiol and (199.04 g, 2.344 mole) of dichloromethane. After one hour the reaction was quenched with 250 ml of isopropyl alcohol. The solids were filtered and the product 1,4 bis [4-hydroxybenzoyl] 2-phenyl phenylene was purified by extraction of the solid material with water and dichloromethane for a 68.6% yield. It is suspected that the isopropyl alcohol partially solubilizes the product and yield was lost in the filtration of the precipitated material. NMR was used to confirm the structure and purity of the material.

### Example 19.

### Bis 1,4 [4-hydroxybenzoyloxy] 2-methyl phenylene

(29g, 0.23 mole) of methylhydroquinone and (100 g, 0.58 mole) of anisoyl chloride were added to 50 ml of pyridine and 250 ml of dry dichloromethane. The mixture was stirred for 72 hours at room temperature under nitrogen gas until it was mostly solidified. The 1,4 bis [4-methoxybenzoyl] 2-methyl phenylene was recrystallized from isopropyl alcohol for a 95% yield. (m.p. 172-174°C)

(90 g, 0.229 mole) of the 1,4 bis [4-methoxybenzoyl 2-methyl phenylene] was added to a solution consisting of (250 g, 1.835 mole) of aluminum chloride, (142.27 g, 2.290 mole) of ethane thiol and (486 g, 5.725 mole) of dichloromethane. After one hour the reaction was quenched with 880 ml of isopropyl alcohol. The solids were filtered and the product 1,4 bis [4-hydroxybenzoyl}2-methyl phenylene] was purified by extraction of the solid material with water and dichloromethane for an 84% yield. NMR was used to confirm the structure and purity of the material.

## Claims

1. A method for making platform molecules comprising reacting 4-alkoxy benzoyl chloride with a hydroquinone comprising a desired substituent (R²) under first conditions effective to produce bis 1,4 [4-alkoxybenzoyloxy]-R²⁻phenylene (alkyl ether) comprising bis terminal alkoxy groups wherein, when both bis terminal alkoxy groups are converted to polymerizable groups, R² provides sufficient steric hindrance to achieve a nematic state at room temperature while suppressing crystallinity at room temperature.

2. The method of Claim 1 wherein said alkyl ether is subjected to second conditions effective to cleave said bis terminal alkoxy groups, thereby producing a solution comprising diphenolic platform molecules comprising bis terminal hydroxyl groups.

3. The method of Claim 1 or Claim 2 wherein said 4-alkoxy benzoyl chloride is 4-methoxy benzoyl chloride.

4. The method of any one of Claims 1-3 wherein said first conditions comprise a solution comprising a hydrogen chloride scavenging agent effective to produce said alkyl ether.

5. The method of Claim 4 wherein said hydrogen chloride scavenging agent is selected from the group consisting of aromatic and aliphatic amines.

6. The method of Claim 4 wherein said hydrogen chloride scavenging agent comprises pyridine.

7. The method of Claim 6 wherein said solution further comprises a trialkylamine having from about 2 to about 4 carbon atoms.

8. The method of Claim 7 wherein said solution further comprises triethyl amine.

9. The method of any one of Claims 1-7 wherein R² is selected from the group consisting of methyl groups and t-butyl groups.

10. The method of any one of Claims 1-7 wherein when said alkyl ether is to be incorporated into a monomer, R² is selected from the group consisting of t-butyl groups, isopropyl groups, secondary butyl groups, methyl groups, and phenyl groups; and, when said alkyl ether is to be incorporated into a dimer, R² is selected from the group consisting of bulky organic groups and groups having a bulk less than methyl groups.

11. The method of any one of Claims 1-10 wherein said second conditions comprise exposing said bis terminal alkoxy groups to a mixture comprising a quantity of said alkyl ether and an amount of a nucleophile at a temperature and for a time, said quantity, said amount, said temperature and said time being effective to produce complexes comprising said diphenolic platform molecules comprising intact aromatic ester bonds and to cause said complexes to precipitate out of said solution substantially as they are formed.

12. The method of any one of Claims 1-10 wherein said second conditions comprise exposing said bis terminal alkoxy groups to an amount of an aliphatic thiol effective to dissolve a concentration of aluminum chloride in a chlorinated solvent, said exposing taking place at a temperature and for a time effective to produce complexes comprising said diphenolic platform molecules comprising intact aromatic ester bonds and to cause said complexes to precipitate out of said solution substantially as they are formed.

13. The method of Claim 11 or Claim 12 wherein said bis-terminal alkoxy groups have from about 1 to about 4 carbon atoms.

14. The method of Claim 11 or Claim 12 wherein said bis-terminal alkoxy groups are methyl ether groups.

15. The method of Claim 12 or any Claim dependent thereon wherein said aliphatic thiol comprises an alkyl group having from about 1 to about 11 carbon atoms.

16. The method of Claim 12 or any Claim dependent thereon wherein said aliphatic thiol is ethane thiol.

17. The method of Claim 12 or any Claim dependent thereon wherein said quantity of alkyl ether and said amount of aliphatic thiol is effective to produce at least one mole of thiol per mole of alkyl ether.

18. The method of Claim 12 or any Claim dependent thereon wherein said quantity of alkyl ether and said amount of aliphatic thiol is effective to produce at least two moles of thiol per mole of alkyl ether.

19. The method of Claim 12 or any Claim dependent thereon wherein said concentration of aluminum chloride produces a ratio of said aluminum chloride to said alkyl ether of 4: 1 or more.

20. The method of Claim 12 or any Claim dependent thereon wherein said second conditions further comprise an amount of chlorinated solvent effective to maintain said precipitate in slurry form.

21. The method of Claim 20 wherein said amount of chlorinated solvent comprises at least one mole of thiol per mole of alkyl ether.

22. The method of Claims 11-21 further comprising quenching said precipitate.

23. The method of Claim 22 wherein said quenching comprises mixing said precipitate with a quenching agent selected from the group consisting of water, alcohol, and combinations thereof, under quenching conditions effective to decompose said complexes.

24. The method of Claim 12 or any Claim dependent thereon wherein said amount of chlorinated solvent comprises a molar excess of from about 3 to about 7 relative to said ethane thiol.

25. The method of Claim 12 or any Claim dependent thereon wherein said amount of chlorinated solvent comprises a molar excess of 5 or more relative to said ethane thiol.

26. The method of Claim 12 or any Claim dependent thereon wherein said chlorinated solvent is methylene chloride.

27. The method of Claim 11 or Claim 12 or any Claim dependent thereon wherein said temperature comprises an initial temperature of about 0 °C.

28. The method of Claim 12 or any Claim dependent thereon wherein said temperature is maintained at about 25° C or less.

29. The method of Claim 2 or any Claim dependent thereon further comprising exposing said diphenolic platform molecules comprising bis terminal hydroxyl groups to said first conditions, producing elongated diphenolic platform molecules comprising at least one terminal alkoxy group.

30. The method of Claim 29 further comprising subjecting said elongated diphenolic platform molecules to said second conditions, said second conditions being effective to cleave said at least one terminal alkoxy group on said elongated diphenolic platform molecules to produce terminally hydroxylated elongated diphenolic platform molecules comprising at least one terminal hydroxyl group.

31. The method of Claim 2 or any Claim dependent thereon further comprising subjecting molecules selected from the group consisting of said diphenolic platform molecules comprising bis terminal hydroxyl groups and said hydroxylated elongated diphenolic platform molecules to conditions effective to react at least one terminal hydroxyl group with a polymerizable group.

32. The method of Claim 31 wherein said polymerizable group comprises a polymerizable unsaturated carbon-carbon bond.

33. The method of any on of Claim 1-32 further comprising reacting a first terminal hydroxyl group of a first diphenolic platform molecule with a first end of a bridging agent selected from the group consisting of an α:ω-carboxylic acid and an oligodialkylsiloxane comprising an alkyl group having from about 4 to about 12 carbon atoms; and reacting a first terminal hydroxyl group of a second alkyl ether molecule with a second, opposed end of said bridging agent.

## Patentansprüche

1. Verfahren zur Herstellung von Plattformmolekülen, umfassend ein Umsetzen von 4-Alkoxybenzoylchlorid mit einem Hydrochinon umfassend einen gewünschten Substituenten (R²) unter ersten Bedingungen, die effektiv sind, um Bis-1,4-[4-alkoxybenzoyloxy]-R²-phenylen (Alkylether) umfassend bis-terminale Alkoxygruppen herzustellen, wobei, wenn beide bis-terminalen Alkoxygruppen in polymerisierbare Gruppen umgewandelt werden, R² eine ausreichende sterische Hinderung bereitstellt, um einen nematischen Zustand bei Raumtemperatur zu erzielen, während Kristallinität bei Raumtemperatur unterdrückt wird.

2. Verfahren nach Anspruch 1, wobei der Alkylether zweiten Bedingungen unterworfen wird, die effektiv sind, um die bis-terminalen Alkoxygruppen zu spalten, wodurch eine Lösung umfassend diphenolische Plattformmoleküle umfassend bis-terminale Hydroxylgruppen erzeugt wird.

3. Verfahren nach Anspruch 1 oder Anspruch 2, wobei das 4-Alkoxybenzoylchlorid 4-Methoxybenzoylchlorid ist.

4. Verfahren nach einem der Ansprüche 1 bis 3, wobei die ersten Bedingungen eine Lösung umfassen, die ein Chlorwasserstoffscavengeragens umfaßt, die effektiv ist, um den Alkylether herzustellen.

5. Verfahren nach Anspruch 4, wobei das Chlorwasserstoffscavengeragens ausgewählt wird aus der Gruppe bestehend aus aromatischen und aliphatischen Aminen.

6. Verfahren nach Anspruch 4, wobei das Chlorwasserstoffscavengeragens Pyridin umfaßt.

7. Verfahren nach Anspruch 6, wobei die Lösung ferner ein Trialkylamin mit etwa 2 bis etwa 4 Kohlenstoffatomen umfaßt.

8. Verfahren nach Anspruch 7, wobei die Lösung ferner Triethylamin umfaßt.

9. Verfahren nach einem der Ansprüche 1 bis 7, wobei R² ausgewählt wird aus der Gruppe bestehend aus Methylgruppen und t-Butylgruppen.

10. Verfahren nach einem der Ansprüche 1 bis 7, wobei, wenn der Alkylether in ein Monomer zu integrieren ist, R² ausgewählt wird aus der Gruppe bestehend aus t-Butylgruppen, Isopropylgruppen, sekundären Butylgruppen, Methylgruppen und Phenylgruppen; und, wenn der Alkylether in ein Dimer zu integrieren ist, R² ausgewählt wird aus der Gruppe bestehend aus sperrigen organischen Gruppen und Gruppen mit einer Größe kleiner als Methylgruppen.

11. Verfahren nach einem der Ansprüche 1 bis 10, wobei die zweiten Bedingungen ein Exponieren der bis-terminalen Alkoxygruppen gegenüber einer Mischung umfassend eine Quantität des Alkylethers und eine Menge eines Nukleophils bei einer Temperatur und für eine Zeit umfassen, wobei die Quantität, die Menge, die Temperatur und die Zeit effektiv sind, um Komplexe umfassend die diphenolischen Plattformmoleküle umfassend intakte aromatische Esterbindungen herzustellen, und zu bewirken, daß die Komplexe aus der Lösung im wesentlichen ausfällen, wenn sie gebildet werden.

12. Verfahren nach einem der Ansprüche 1 bis 10, wobei die zweiten Bedingungen ein Exponieren der bis-terminalen Alkoxygruppen gegenüber einer Menge eines aliphatischen Thiols umfassen, die effektiv ist, um eine Konzentration an Aluminiumchlorid in einem chlorierten Lösungsmittel aufzulösen, wobei das Exponieren bei einer Temperatur und für eine Zeit stattfindet, die effektiv sind, um Komplexe umfassend die diphenolischen Plattformmoleküle umfassend intakte aromatische Esterbindungen herzustellen, und zu bewirken, daß die Komplexe aus der Lösung im wesentlichen ausfallen, wenn sie gebildet werden.

13. Verfahren nach Anspruch 11 oder Anspruch 12, wobei die bis-terminalen Alkoxygruppen etwa 1 bis etwa 4 Kohlenstoffatome aufweisen.

14. Verfahren nach Anspruch 11 oder Anspruch 12, wobei die bis-terminalen Alkoxygruppen Methylethergruppen sind.

15. Verfahren nach Anspruch 12 oder irgendeinem davon abhängigen Anspruch, wobei das aliphatische Thiol eine Alkylgruppe mit etwa 1 bis etwa 11 Kohlenstoffatomen umfaßt.

16. Verfahren nach Anspruch 12 oder irgendeinem davon abhängigen Anspruch, wobei das aliphatische Thiol Ethanthiol ist.

17. Verfahren nach Anspruch 12 oder irgendeinem davon abhängigen Anspruch, wobei die Quantität an Alkylether und die Menge an aliphatischem Thiol effektiv ist, um wenigstens ein Mol Thiol pro Mol Alkylether herzustellen.

18. Verfahren nach Anspruch 12 oder irgendeinem davon abhängigen Anspruch, wobei die Quantität an Alkylether und die Menge an aliphatischem Thiol effektiv ist, um wenigstens zwei Mol Thiol pro Mol Alkylether herzustellen.

19. Verfahren nach Anspruch 12 oder irgendeinem davon abhängigen Anspruch, wobei die Konzentration an Aluminiumchlorid ein Verhältnis des Aluminiumchlorids zum Alkylether von 4:1 oder mehr erzeugt.

20. Verfahren nach Anspruch 12 oder irgendeinem davon abhängigen Anspruch, wobei die zweiten Bedingungen ferner eine Menge an chloriertem Lösungsmittel umfassen, die effektiv ist, um den Niederschlag in Slurryform zu bewahren.

21. Verfahren nach Anspruch 20, wobei die Menge an chloriertem Lösungsmittel wenigstens ein Mol Thiol pro Mol Alkylether umfaßt.

22. Verfahren nach den Ansprüchen 11-21, weiter umfassend ein Quenchen des Niederschlags.

23. Verfahren nach Anspruch 22, wobei das Quenchen ein Mischen des Niederschlags mit einem Quenchagens umfaßt, das ausgewählt wird aus der Gruppe bestehend aus Wasser, Alkohol und Kombinationen derselben, unter Quenchbedingungen, die effektiv sind, um die Komplexe zu zersetzen.

24. Verfahren nach Anspruch 12 oder irgendeinem davon abhängigen Anspruch, wobei die Menge an chloriertem Lösungsmittel einen molaren Überschuß von etwa 3 bis etwa 7 relativ zum Ethanthiol umfaßt.

25. Verfahren nach Anspruch 12 oder irgendeinem davon abhängigen Anspruch, wobei die Menge an chloriertem Lösungsmittel einen molaren Überschuß von 5 oder mehr relativ zum Ethanthiol umfaßt.

26. Verfahren nach Anspruch 12 oder irgendeinem davon abhängigen Anspruch, wobei das chlorierte Lösungsmittel Methylenchlorid ist.

27. Verfahren nach Anspruch 11 oder Anspruch 12 oder irgendeinem davon abhängigen Anspruch, wobei die Temperatur eine Anfangstemperatur von etwa 0°C umfaßt.

28. Verfahren nach Anspruch 12 oder irgendeinem davon abhängigen Anspruch, wobei die Temperatur bei etwa 25°C oder weniger gehalten wird.

29. Verfahren nach Anspruch 2 oder irgendeinem davon abhängigen Anspruch, weiter umfassend ein Exponieren der diphenolischen Plattformmoleküle umfassend bis-terminale Hydroxylgruppen gegenüber den ersten Bedingungen, Erzeugen verlängerter diphenolischer Plattformmoleküle umfassend wenigstens eine terminale Alkoxygruppe.

30. Verfahren nach Anspruch 29, weiter umfassend ein Unterwerfen der verlängerten diphenolischen Plattformmoleküle den zweiten Bedingungen, wobei die zweiten Bedingungen effektiv sind, um die wenigstens eine terminale Alkoxygruppe an den verlängerten diphenolischen Plattformmolekülen zu spalten, um terminal hydroxylierte, verlängerte, diphenolische Plattformmoleküle umfassend wenigstens eine terminale Hydroxylgruppe herzustellen.

31. Verfahren nach Anspruch 2 oder irgendeinem davon abhängigen Anspruch, weiter umfassend ein Unterwerfen der Moleküle, die ausgewählt werden aus der Gruppe bestehend aus den diphenolischen Plattformmolekülen umfassend bis-terminale Hydroxylgruppen und den hydroxylierten, verlängerten, diphenolischen Plattformmolekülen, gegenüber Bedingungen, die effektiv sind, um wenigstens eine terminale Hydroxylgruppe mit einer polymerisierbaren Gruppe umzusetzen.

32. Verfahren nach Anspruch 31, wobei die polymerisierbare Gruppe eine polymerisierbare, ungesättigte Kohlenstoff-Kohlenstoff-Bindung umfaßt.

33. Verfahren nach einem der Ansprüche 1-32, weiter umfassend ein Umsetzen einer ersten terminalen Hydroxylgruppe eines ersten diphenolischen Plattformmoleküls mit einem ersten Ende eines Verbrückungsagens, das ausgewählt wird aus der Gruppe bestehend aus einer α:ω-Carbonsäure und einem Oligodialkylsiloxan umfassend eine Alkylgruppe mit etwa 4 bis etwa 12 Kohlenstoffatomen; und Umsetzen einer ersten terminalen Hydroxylgruppe eines zweiten Alkylethermoleküls mit einem zweiten, gegenüberliegenden Ende des Verbrückungsagens.

## Revendications

1. Procédé pour produire des molécules plates-formes comprenant la réaction d'un chlorure de 4-alcoxybenzoyle avec une hydroquinone comprenant un substituant souhaité (R²) dans des premières conditions efficaces pour produire un bis 1,4 [4-alcoxybenzoyloxy]-R²-phénylène (alkyléther) comprenant des groupes alcoxy bis terminaux où, quand les deux groupes alcoxy bis terminaux sont convertis en groupes polymérisables, R² produit un empêchement stérique suffisant pour obtenir un état nématique à la température ambiante tout en supprimant la cristallinité à la température ambiante.

2. Procédé selon la revendication 1 où ledit alkyléther est soumis à des secondes conditions efficaces pour cliver lesdits groupes alcoxy bis terminaux, pour produire une solution comprenant des molécules plates-formes diphénoliques comprenant des groupes hydroxyle bis terminaux.

3. Procédé selon la revendication 1 ou la revendication 2 où ledit chlorure de 4-alcoxy benzoyle est le chlorure de 4-méthoxy benzoyle.

4. Procédé selon l'une quelconque des revendications 1-3 où lesdites premières conditions comprennent une solution comprenant un agent fixant le chlorure d'hydrogène efficace pour produire ledit alkyléther.

5. Procédé selon la revendication 4 où ledit agent fixant le chlorure d'hydrogène est choisi dans le groupe consistant en les amines aromatiques et aliphatiques.

6. Procédé selon la revendication 4 où ledit agent fixant le chlorure d'hydrogène comprend de la pyridine.

7. Procédé selon la revendication 6 où ladite solution comprend en outre une trialkylamine ayant d'environ 2 à environ 4 atomes de carbone.

8. Procédé selon la revendication 7 où ladite solution comprend en outre de la triéthylaminc.

9. Procédé selon l'une quelconque des revendications 1-7 où R² est choisi dans le groupe consistant en les groupes méthyle et les groupes t-butyle.

10. Procédé selon l'une quelconque des revendications 1-7 où, quand ledit alkyléther doit être incorporé dans un monomère, R² est choisi dans le groupe consistant en les groupes t-butyle, les groupes isopropyle, les groupes butyle secondaires, les groupes méthyle et les groupes phényle ; et, quand ledit alkyléther doit être incorporé dans un dimère, R² est choisi dans le groupe consistant en les groupes organiques volumineux et les groupes ayant un volume inférieur aux groupes méthyle.

11. Procédé selon l'une quelconque des revendications 2-10 où lesdites secondes conditions comprennent l'exposition desdits groupes bis alcoxy terminaux à un mélange comprenant une quantité dudit alkyléther et une masse d'un nucléophile à une température et pendant une durée, ladite quantité, ladite masse, ladite température et ladite durée étant efficaces pour produire des complexes comprenant lesdites molécules plates-formes diphénoliques comprenant des liaisons ester aromatiques intactes et pour amener lesdits complexes à précipiter dans ladite solution sensiblement quand ils sont formés.

12. Procédé selon l'une quelconque des revendications 2-10 où lesdites secondes conditions comprennent l'exposition desdits groupes bis alcoxy terminaux à une masse d'un thiol aliphatique efficace pour dissoudre une concentration de chlorure d'aluminium dans un solvant chloré, ladite exposition ayant lieu à une température et pendant une durée efficaces pour produire des complexes comprenant lesdites molécules plates-formes diphénoliques comprenant des liaisons ester aromatiques intactes et pour amener lesdits complexes à précipiter dans ladite solution sensiblement quand ils sont formés.

13. Procédé selon la revendication 11 ou la revendication 12 où lesdits groupes bis alcoxy terminaux ont d'environ 1 à environ 4 atomes de carbone.

14. Procédé selon la revendication 11 ou la revendication 12 où lesdits groupes bis alcoxy terminaux sont des groupes méthyléther.

15. Procédé selon la revendication 12 ou toute revendication dépendante de celle-ci où ledit thiol aliphatique comprend un groupe alkyle ayant d'environ 1 à environ 11 atomes de carbone.

16. Procédé selon la revendication 12 ou toute revendication dépendante de celle-ci où ledit thiol aliphatique est l'éthanethiol.

17. Procédé selon la revendication 12 ou toute revendication dépendante de celle-ci où ladite quantité d'alkyléther et ladite masse de thiol aliphatique sont efficaces pour produire au moins une mole de thiol par mole d'alkyléther.

18. Procédé selon la revendication 12 ou toute revendication dépendante de celle-ci où ladite quantité d'alkyléther et ladite masse de thiol aliphatique sont efficaces pour produire au moins deux moles de thiol par mole d'alkyléther.

19. Procédé selon la revendication 12 ou toute revendication dépendante de celle-ci où ladite concentration de chlorure d'aluminium produit un rapport dudit chlorure d'aluminium audit alkyléther de 4 ; 1 ou plus.

20. Procédé selon la revendication 12 ou toute revendication dépendante de celle-ci où lesdites secondes conditions comprennent en outre une masse de solvant chloré efficace pour maintenir ledit précipité sous forme de suspension.

21. Procédé selon la revendication 20 où ladite masse de solvant chloré comprend au moins une mole de thiol par mole d'alkylélher.

22. Procédé selon les revendications 11-21 comprenant en outre la trempe dudit précipité.

23. Procédé selon la revendication 22 où ladite trempe comprend le mélange dudit précipité avec un agent de trempe choisi dans le groupe consistant en l'eau, un alcool et leurs combinaisons, dans des conditions de trempe efficaces pour décomposer lesdits complexes.

24. Procédé selon la revendication 12 ou toute revendication dépendante de celle-ci où ladite masse de solvant chloré comprend un excès molaire d'environ 3 à environ 7 par rapport audit éthane thiol.

25. Procédé selon la revendication 12 ou toute revendication dépendante de celle-ci où ladite masse de solvant chloré comprend un excès molaire de 5 ou plus par rapport audit éthane thiol.

26. Procédé selon la revendication 12 ou toute revendication dépendante de celle-ci où ledit solvant chloré est le chlorure de méthylène.

27. Procédé selon la revendication 11 ou 12 ou toute revendication dépendante de celle-ci où ladite température comprend une température initiale d'environ 0°C.

28. Procédé selon la revendication 12 ou toute revendication dépendante de celle-ci où ladite température est maintenue à environ 25°C ou moins.

29. Procédé selon la revendication 2 ou toute revendication dépendante de celle-ci comprenant en outre l'exposition desdites molécules plates-formes diphénoliques comprenant des groupes hydroxyle bis terminaux auxdites premières conditions, pour produire des molécules plates-formes diphénoliques allongées comprenant au moins un groupe alcoxy terminal.

30. Procédé selon la revendication 29 comprenant en outre l'exposition desdites molécules plates-formes diphénoliques allongées auxdites secondes conditions, lesdites secondes conditions étant efficaces pour cliver ledit au moins un groupe alcoxy terminal sur lesdites molécules plates-formes diphénoliques allongées pour produire des molécules plates-formes diphénoliques allongées hydroxylées en position terminale comprenant au moins un groupe hydroxyle terminal.

31. Procédé selon la revendication 2 ou toute revendication dépendante de celle-ci comprenant en outre l'exposition de molécules choisies dans le groupe consistant en lesdites molécules plates-formes diphénoliques comprenant des groupes hydroxyle bis terminaux et lesdites molécules plates-formes diphénoliques allongées hydroxylées à des conditions efficaces pour faire réagir au moins un groupe hydroxyle terminal avec un groupe polymérisable.

32. Procédé selon la revendication 31 où ledit groupe polymérisable comprend une liaison carbone-carbone insaturée polymérisable.

33. Procédé selon l'une quelconque des revendications 1-32 comprenant en outre la réaction d'un premier groupe hydroxyle terminal d'une première molécule plates-formes diphénolique avec une première extrémité d'un agent de pontage choisi dans le groupe consistant en un acide α:ω-carboxylique et un oligodialkylsiloxane comprenant un groupe alkyle ayant d'environ 4 à environ 12 atomes de carbone; et la réaction d'un premier groupe hydroxyle terminal d'une seconde molécule d'alkyl éther avec une seconde extrémité, opposée, dudit agent de pontage.
